# EUROPÄISCHE PATENTSCHRIFT

(11) **EP 1 676 052 B1**
(45) Veröffentlichungstag und Bekanntmachung des Hinweises auf die Patenterteilung: **18.04.2007**
(21) Anmeldenummer: 04740368.8
(22) Anmeldetag: 28.06.2004
(51) Int. Cl.: F16H 3/66, F16D 25/10

(54) **MEHRSTUFEN-AUTOMATGETRIEBE MIT DREI PLANETENRADSÄTZEN**
MULTISTAGE AUTOMATIC TRANSMISSION COMPRISING THREE PLANETARY GEAR SETS
TRANSMISSION AUTOMATIQUE MULTI-ETAGEE COMPRENANT TROIS TRAINS PLANETAIRES

(30) Priorität: 23.07.2003 DE 10333429
(43) Veröffentlichungstag der Anmeldung: 05.07.2006
(73) Patentinhaber: ZF FRIEDRICHSHAFEN Aktiengesellschaft, 88038 Friedrichshafen (DE)
(72) Erfinder: DIOSI, Gabor, 88045 Friedrichshafen (DE); HAUPT, Josef, 88069 Tettnang (DE); BREHMER, Martin, 78467 Konstanz (DE)
(86) Internationale Anmeldenummer: PCT/EP2004/006967
(87) Internationale Veröffentlichungsnummer: WO 2005/019693

(56) Entgegenhaltungen:
- EP-A- 0 605 953
- DE-A- 19 912 480
- US-A- 4 732 253
- US-A- 5 232 411
- US-A- 5 533 945

## Beschreibung

Die vorliegende Erfindung betrifft ein Mehrstufen-Automatgetriebe mit mindestens drei Einzel-Planetenradsätzen und mindestens fünf Schaltelementen, nach dem Oberbegriff des Patentanspruchs 1.

Automatgetriebe mit mehreren, ohne Gruppenschaltung schaltbaren Gängen sind vielfältig bekannt. Aus der DE 199 12 480 A1 beispielsweise ist ein gattungsgemäßes Automatgetriebe mit drei Einsteg-Planetenradsätzen sowie drei Bremsen und zwei Kupplungen zum Schalten von sechs Vorwärtsgängen und einem Rückwärtsgang bekannt, das für Kraftfahrzeuge sehr gut geeignete Übersetzungen mit einer hohen Gesamtspreizung und günstigen Stufensprüngen sowie einer hohen Anfahrübersetzung in Vorwärtsrichtung aufweist. Die einzelnen Gänge werden durch selektives Schließen von jeweils zwei der sechs Schaltelemente erzielt, sodaß zum Umschalten von einem Gang in den nächstfolgend höheren oder nächstfolgend niedrigeren Gang von den gerade betätigten Schaltelementen jeweils nur ein.Schaltelement geöffnet und ein weiteres Schaltelement geschlossen wird.

Dabei ist eine Antriebswelle des Automatgetriebes ständig mit einem Sonnenrad des zweiten Planetenradsatzes verbunden. Weiterhin ist die Antriebswelle über die erste Kupplung mit einem Sonnenrad des ersten Planetenradsatzes und/oder über die zweite Kupplung mit einem Steg des ersten Planetenradsatzes verbindbar. Zusätzlich oder alternativ ist das Sonnenrad des ersten Planetenradsatzes über die erste Bremse mit einem Gehäuse des Automatgetriebes und/oder der Steg des ersten Planetenradsatzes über die zweite Bremse mit dem Gehäuse und/oder ein Sonnenrad des dritten Planetenradsatzes über die dritte Bremse mit dem Gehäuse verbindbar.

Für die kinematische Kopplung der einzelnen Planetenradsätze miteinander offenbart die DE 199 12 480 A1 zwei verschiedene Versionen. In der ersten Version ist vorgesehen, daß eine Abtriebswelle des Automatgetriebes ständig mit einem Steg des dritten Planetenradsatzes und einem Hohlrad des ersten Planetenradsatzes verbunden ist, und daß der Steg des ersten Planetenradsatzes ständig mit einem Hohlrad des zweiten Planetenradsatzes und ein Steg des zweiten Planetenradsatzes ständig mit einem Hohlrad des dritten Planetenradsatzes verbunden ist. Die Antriebs- und die Abtriebswelle können dabei sowohl koaxial zueinander auf gegenüberliegenden Seiten des Getriebegehäuses angeordnet sein, als auch achsparallel auf gegenüberliegenden Seiten oder derselben Seite des Getriebegehäuses. In der zweiten Version ist vorgesehen, daß die Abtriebswelle ständig mit dem Steg des zweiten Planetenradsatzes und dem Hohlrad des ersten Planetenradsatzes verbunden ist, daß der Steg des ersten Planetenradsatzes ständig mit dem Hohlrad des dritten Planetenradsatzes verbunden ist, und daß das Hohlrad des zweiten Planetenradsatzes ständig mit dem Steg des dritten Planetenradsatzes verbunden ist. Eine derartige Ausbildung ist besonders für eine koaxiale Anordnung von An- und Abtriebswellen geeignet.

Hinsichtlich der räumlichen Anordnung der Planetenradsätze schlägt die DE 199 12 480 A1 vor, die drei Planetenradsätze koaxial in Reihe nebeneinander anzuordnen, wobei der zweite Planetenradsatz axial zwischen dem ersten und dritten Planetenradsatz angeordnet ist. Hinsichtlich der räumlichen Anordnung der einzelnen Schaltelemente relativ zueinander und relativ zu den Planetenradsätzen schlägt die DE 199 12 480 A1 vor, die erste und zweite Bremse stets unmittelbar nebeneinander anzuordnen, wobei die zweite Bremse stets unmittelbar axial an den ersten Planetenradsatz angrenzt, und die dritte Bremse stets auf der dem ersten Planetenradsatzes abgewandten Seite des dritten Planetenradsatzes anzuordnen, sowie die beiden Kupplungen stets unmittelbar nebeneinander anzuordnen. In einer ersten Anordnungsvariante sind beide Kupplungen auf der dem dritten Planetenradsatz abgewandten Seite des ersten Planetenradsatzes angeordnet, wobei die erste Kupplung axial unmittelbar an die erste Bremse angrenzt und näher am ersten Planetenradsatz angeordnet ist als die zweite Kupplung. In Verbindung mit einer nicht koaxialen Lage von Antriebs- und Abtriebswelle wird in einer zweiten Anordnungsvariante vorgeschlagen, daß beide Kupplungen auf der dem ersten Planetenradsatz abgewandten Seite des dritten Planetenradsatzes angeordnet sind, wobei die zweite Kupplung näher am dritten Planetenradsatz angeordnet ist als die erste Kupplung und axial an ein mit der Abtriebswelle wirkverbundenes Abtriebsstirnrad angrenzt, welches wiederum auf der dem dritten Planetenradsatz abgewandten Seite der dritten Bremse angeordnet ist.

Der vorliegenden Erfindung liegt die Aufgabe zugrunde, für das aus dem Stand der Technik der DE 199 12 480 A1 bekannte Automatgetriebe alternative Bauteilanordnungen darzustellen, mit möglichst kompaktem und in Getriebelängsrichtung vergleichsweise schlankem Getriebeaufbau. Vorzugsweise soll das Automatgetriebe in einem Kraftfahrzeug mit Standard-Antrieb und koaxial zueinander angeordneter Antriebs- und Abtriebswelle Anwendung finden können, durch vergleichsweise einfache Modifikationen möglichst aber auch bei nicht koaxialer Antriebs- und Abtriebswelle einsetzbar sein.

Erfindungsgemäß gelöst wird die Aufgabe durch ein Mehrstufen-Automatgetriebe mit den Merkmalen des Patentanspruchs 1. Vorteilhafte Ausgestaltungen und Weiterbildungen der Erfindung ergeben sich aus den Unteransprüchen.

Ausgehend vom gattungsgemäßen Stand der Technik der DE 199 12 480 A1, weist das Mehrstufen-Automatgetriebe mindestens drei gekoppelte Einzel-Planetenradsätze auf, die koaxial zueinander und räumlich gesehen nebeneinander angeordnet sind, wobei der zweite Planetenradsatz räumlich gesehen stets zwischen dem ersten und zweiten Planetenradsatz angeordnet ist. Weiterhin weist das Mehrstufen-Automatgetriebe mindestens fünf Schaltelemente auf. Ein Sonnenrad des dritten Planetenradsatzes ist über das als Bremse ausgebildete erste Schaltelement an einem Getriebegehäuse des Mehrstufen-Automatgetriebes festsetzbar. Eine Antriebswelle des Mehrstufen-Automatgetriebes ist ständig mit einem Sonnenrad des zweiten Planetenradsatzes verbunden. Weiterhin ist die Antriebswelle über das als Kupplung ausgebildete zweite Schaltelement mit einem Sonnenrad des ersten Planetenradsatzes und zusätzlich oder alternativ über das als Kupplung ausgebildete fünfte Schaltelement mit einem Steg des ersten Planetenradsatzes verbindbar. Alternativ ist das Sonnenrad des ersten Planetenradsatzes über das als Bremse ausgebildete dritte Schaltelement und/oder der Steg des ersten Planetenradsatzes über das als Bremse ausgebildete vierte Schaltelement an dem Getriebegehäuse festsetzbar.

Eine Abtriebswelle des Mehrstufen-Automatgetriebes ist ständig mit einem Hohlrad des ersten Planetenradsatzes wirkverbunden, wobei das Hohlrad des ersten Planetenradsatzes zusätzlich ständig entweder mit einem Steg des dritten Planetenradsatzes oder einem Steg des zweiten Planetenradsatzes verbunden ist.

Gemäß der Erfindung sind das dritte und vierte Schaltelement räumlich gesehen radial übereinander angeordnet und das fünfte und zweite Schaltelement räumlich gesehen radial übereinander angeordnet. Hierdurch wird gegenüber dem Stand der Technik der DE 199 12 480 A1 ein deutlich kompakterer Getriebeaufbau mit vorteilhaft kurzer Baulänge erzielt, ohne daß ein Außendurchmesser des Getriebegehäuses für einen Einbau in ein Kraftfahrzeug unvorteilhaft groß wird.

Hinsichtlich Anordnung des (als Bremse ausgebildeten) dritten und des (ebenfalls als Bremse ausgebildeten) vierten Schaltelementes relativ zueinander wird erfindungsgemäß vorgeschlagen, das dritte Schaltelement, über welches das Sonnenrad des ersten Planetenradsatzes festsetzbar ist, radial unterhalb des vierten Schaltelementes, über welches der Steg des ersten Planetenradsatzes festsetzbar ist, anzuordnen. Lamellen des dritten Schaltelementes weisen also einen kleineren Durchmesser auf als Lamellen des vierten Schaltelementes, und eine Servoeinrichtung des dritten Schaltelementes ist räumlich gesehen zumindest überwiegend radial unterhalb einer Servoeinrichtung des vierten Schaltelementes angeordnet.

Zweckmäßigerweise sind die Servoeinrichtungen des dritten und vierten Schaltelementes dabei in einer gemeinsamen getriebegehäusefesten Wand integriert und betätigen die jeweiligen Lamellen des dritten bzw. vierten Schaltelementes axial in Richtung des ersten Planetenradsatzes. Räumlich gesehen ist die Zwischenplatte also auf der dem ersten Planetenradsatz abgewandten Seite der Lamellen des dritten bzw. vierten Schaltelementes angeordnet und weist entsprechende Kolbenräume (Druckräume) mit darin verschiebbar gelagerten druckbeaufschlagbaren Kolben dieser beiden Servoeinrichtungen auf.

Hinsichtlich Anordnung des (als Kupplung ausgebildeten) fünften und (ebenfalls als Kupplung ausgebildeten) zweiten Schaltelementes relativ zueinander wird erfindungsgemäß vorgeschlagen, das fünfte Schaltelement, über welches die Antriebswelle mit dem Steg des ersten Planetenradsatzes verbindbar ist, und das zweite Schaltelement, über welches das Sonnenrad des ersten Planetenradsatzes mit der Antriebswelle verbindbar ist, derart ineinander zu verschachteln, daß das fünfte Schaltelement zumindest überwiegend innerhalb eines Kupplungsraums des zweiten Schaltelementes angeordnet ist. Lamellen des fünften Schaltelementes weisen also einen kleineren Durchmesser auf als Lamellen des zweiten Schaltelementes, und eine Servoeinrichtung des fünften Schaltelementes ist räumlich gesehen vorzugsweise vollständig unterhalb einer Servoeinrichtung des zweiten Schaltelementes angeordnet.

Vorzugsweise sind das zweite, dritte, vierte und fünfte Schaltelement alle auf einer Seite des Getriebes angeordnet, und zwar auf der Seite des ersten Planetenradsatzes, die dem zweiten Planetenradsatz gegenüber liegt. Das (als Bremse ausgebildete) erste Schaltelement, über welches das Sonnenrad des dritten Planetenradsatzes festsetzbar ist, ist dabei vorzugsweise räumlich gesehen auf der dem zweiten Planetenradsatz abgewandten Seite des dritten Planetenradsatzes angeordnet, also auf der den anderen vier Schaltelementen gegenüberliegenden Seite des Radsatzpaketes. Bei koaxial zueinander verlaufender Antriebs- und Abtriebswelle durchgreift dann die mit dem Hohlrad des ersten Planetenradsatzes wirkverbundene Abtriebswelle den dritten Planetenradsatz und einen Kupplungsraum des ersten Schaltelementes in axialer Richtung zentrisch. Für eine Anwendung mit nicht koaxialer Anordnung von Antriebs- und Abtriebswelle, also beispielsweise mit achsparalleler oder winkliger Anordnung von Antriebs- und Abtriebswelle, kann die Abtriebswelle auch räumlich gesehen im Bereich radial oberhalb der Planetenradsätze mit dem Hohlrad des ersten Planetenradsatzes wirkverbunden sein.

In einer ersten Ausgestaltung der Erfindung grenzen das vierte Schaltelement, über welches der Steg des ersten Planetenradsatzes festsetzbar ist, und das radial unterhalb des vierten Schaltelementes angeordnete dritte Schaltelement, über welches das Sonnenrad des ersten Planetenradsatzes festsetzbar ist, beide unmittelbar axial an den ersten Planetenradsatz an, auf der dem zweiten Planetenradsatz abgewandten Seite des ersten Planetenradsatzes.

Zweckmäßigerweise sind die Servoeinrichtungen des dritten und vierten Schaltelementes dabei - wie schon zuvor beschrieben - in einer gemeinsamen getriebegehäusefesten Wand integriert, die in dieser ersten Ausgestaltung als Gehäusezwischenwand ausgebildet ist. Die Servoeinrichtungen des dritten und vierten Schaltelementes betätigen die jeweiligen Lamellen des dritten bzw. vierten Schaltelementes axial in Richtung des ersten Planetenradsatzes. Räumlich gesehen ist die Gehäusezwischenwand also auf der dem ersten Planetenradsatz abgewandten Seite der Lamellen des dritten bzw. vierten Schaltelementes angeordnet und weist entsprechende Kolbenräume (Druckräume) mit darin verschiebbar gelagerten druckbeaufschlagbaren Kolben dieser beiden Servoeinrichtungen auf.

Weiterhin ist in dieser ersten Ausgestaltung der Erfindung das fünfte Schaltelement - sowohl die Lamellen als auch die Servoeinrichtung des fünften Schaltelementes - zumindest weitgehend vollständig innerhalb des Kupplungsraums des zweiten Schaltelementes angeordnet. Diese beiden ineinander verschachtelten Kupplungen sind auf der dem ersten Planetenradsatz abgewandten Seite der Gehäusezwischenwand angeordnet, also in Richtung des Radsatzpaketes gesehen axial vor dem dritten bzw. vierten Schaltelement. Dabei grenzen die Lamellen des zweiten und/oder fünften Schaltelementes unmittelbar an diese Gehäusezwischenwand an. Die Lamellen des zweiten und fünften Schaltelementes werden von der jeweils zugeordneten Servoeinrichtung also axial in Richtung des ersten Planetenradsatzes betätigt.

In einer vorteilhaften Weiterbildung dieser ersten erfindungsgemäßen Ausgestaltung kann ein dynamischer Druckausgleich des räumlich gesehen äußeren zweiten Schaltelementes konstruktiv derart ausgebildet sein, daß ein Kupplungszylinder - beispielsweise ein Außenlamellenträger - des räumlich gesehen inneren fünften Schaltelementes zusammen mit der Servoeinrichtung (Kolben) des zweiten Schaltelementes einen Druckausgleichsraum des zweiten Schaltelementes bildet. In bekannter Weise kann dieser Druckausgleichsraum zum Ausgleich des rotatorischen Druckes eines rotierenden Druckraums des zweiten Schaltelementes drucklos mit Schmiermittel befüllt werden.

In einer zweiten Ausgestaltung der Erfindung sind das vierte Schaltelement wiederum radial oberhalb des dritten Schaltelementes angeordnet und die Servoeinrichtungen des dritten und vierten Schaltelementes in einer gemeinsamen getriebegehäusefesten Wand, die entsprechende Kolbenräume (Druckräume) mit darin verschiebbar gelagerten druckbeaufschlagbaren Kolben dieser beiden Servoeinrichtungen aufweist integriert. Nunmehr bildet diese getriebegehäusefeste Wand eine Außenwand des Getriebegehäuses, die räumlich gesehen auf der Seite des ersten Planetenradsatzes angeordnet ist, die dem zweiten Planetenradsatz gegenüber liegt. Die Servoeinrichtungen des dritten und vierten Schaltelementes betätigen die jeweiligen Lamellen des dritten bzw. vierten Schaltelementes axial in Richtung des ersten Planetenradsatzes.

Weiterhin ist in dieser zweiten Ausgestaltung der Erfindung das fünfte Schaltelement - sowohl die Lamellen als auch die Servoeinrichtung des fünften Schaltelementes - zumindest weitgehend vollständig innerhalb des Kupplungsraums des zweiten Schaltelementes angeordnet. Räumlich gesehen sind diese beiden ineinander verschachtelten Kupplungen nunmehr axial zwischen den beiden an der Gehäuseaußenwand angeordneten Bremsen (axial zwischen drittem und viertem Schaltelement) und dem ersten Planetenradsatz angeordnet, unmittelbar benachbart zum ersten Planetenradsatz. Beide Servoeinrichtungen des zweiten und fünften Schaltelementes betätigen die jeweiligen Lamellen des zweiten und fünften Schaltelementes axial in Richtung des ersten Planetenradsatzes.

Alle vorgeschlagenen erfindungsgemäßen Bauteileanordnungen sind auf beide im Stand der Technik der DE 199 12 480 A1 offenbarten Radsatzschemata anwendbar. Falls Hohlrad des ersten Planetenradsatzes und Steg des dritten Planetenradsatzes und Abtriebswelle miteinander gekoppelt sind, ist der Steg des zweiten Planetenradsatzes ständig mit einem Hohlrad des dritten Planetenradsatzes und der Steg des ersten Planetenradsatzes ständig mit einem Hohlrad des zweiten Planetenradsatzes verbunden. Falls Hohlrad des ersten Planetenradsatzes und Steg des zweiten Planetenradsatzes und Abtriebswelle miteinander gekoppelt sind, ist der Steg des dritten Planetenradsatzes ständig mit dem Hohlrad des zweiten Planetenradsatzes und der Steg des ersten Planetenradsatzes ständig mit dem Hohlrad des dritten Planetenradsatzes verbunden.

Durch diese kinematische Koppelung der einzelnen. Radsatzelemente untereinander und mit der Antriebs- und Abtriebswelle über die fünf Schaltelemente sind - wie beim Stand der Technik der DE 199 12 480 A1 - insgesamt sechs Vorwärtsgänge derart schaltbar, daß beim Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

Die Erfindung wird im folgenden anhand der Figuren näher erläutert, wobei ähnliche Elemente auch mit ähnlichen Bezugszeichen versehen sind. Es zeigen
- Fig. 1: ein Getriebeschema gemäß dem Stand der Technik;
- Fig. 2: ein Schaltschema des Getriebes gemäß Fig. 1 ;
- Fig. 3: eine beispielhafte erste schematische Bauteilanordnung gemäß der Erfindung;
- Fig. 4: einen Getriebeschnitt des Getriebes gemäß Fig. 3 (in zwei Teilschnitten Fig. 4a und Fig. 4b);
- Fig. 5: eine beispielhafte zweite schematische Bauteilanordnung gemäß der Erfindung;
- Fig. 6: einen Getriebeschnitt des Getriebes gemäß Fig. 5 (in zwei Teilschnitten Fig. 5a und Fig. 5b);
- Fig. 7: eine beispielhafte Variation der schematische Bauteilanordnung gemäß Fig. 3, mit nicht koaxialer Anordnung von Antriebs- und Abtriebswelle; und
- Fig. 8: eine beispielhafte Variation der schematische Bauteilanordnung gemäß Fig. 3, mit einer modifizierten Koppelung einzelner Radsatzelemente.

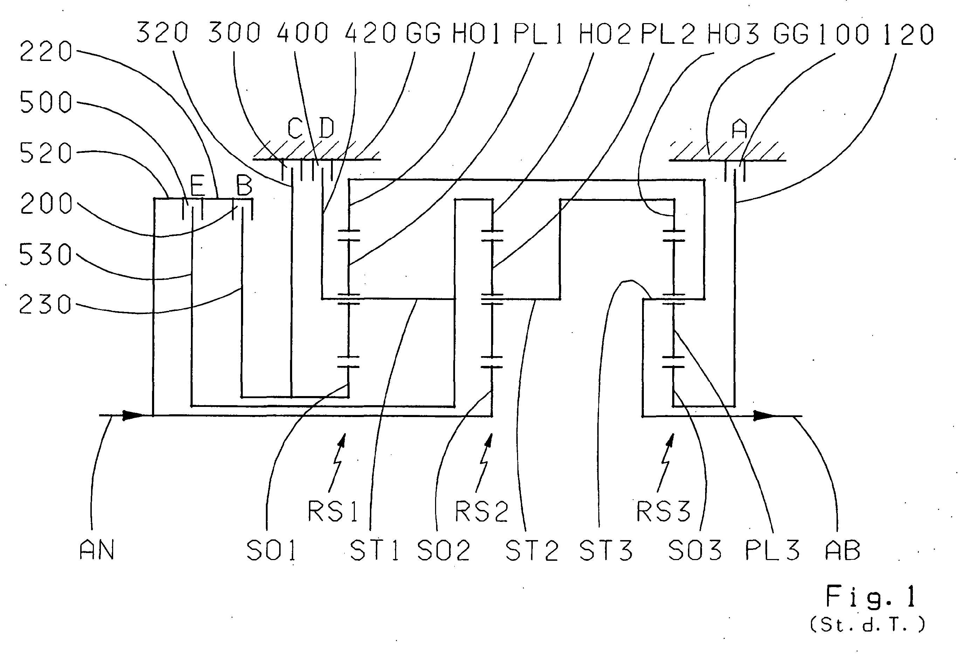

Zur Verdeutlichung der erfindungsgemäßen Bauteileanordnungen ist in Fig. 1 zunächst ein Getriebeschema eines Mehrstufen-Automatgetriebes für ein Kraftfahrzeug mit Standard-Antrieb dargestellt, wie aus dem Stand der Technik der DE 199 12 480 A1 bekannt. Mit AN ist eine Antriebswelle des Automatgetriebes bezeichnet, die mit einem (nicht dargestellten) Antriebsmotor des Automatgetriebes wirkverbunden ist, beispielsweise über einen Drehmomentwandler oder eine Anfahrkupplung oder einen Torsionsdämpfer oder ein Zweimassenschwungrad oder eine starre Welle. Mit AB ist eine Abtriebswelle des Automatgetriebes bezeichnet, die mit mindestens einer Antriebsachse des Kraftfahrzeugs wirkverbunden ist. In dem dargestellten Ausführungsbeispiel sind Antriebswelle AN und Abtriebswelle AB koaxial zueinander angeordnet. RS1, RS2 und RS3 bezeichnen drei gekoppelte Einfach-Planetenradsätze, die hier nebeneinander in Reihe in einem Getriebegehäuse GG angeordnet sind. Alle drei Planetenradsätze RS1, RS2, RS3 weisen jeweils ein Sonnenrad SO1, SO2 und SO3, jeweils ein Hohlrad HO1, HO2 und HO3, sowie jeweils einen Steg ST1, ST2 und ST3 mit Planetenrädern PL1, PL2 und PL3, die jeweils mit Sonnen- und Hohlrad des entsprechenden Radsatzes kämmen, auf. Mit A bis E sind fünf Schaltelemente bezeichnet, wobei das erste, dritte und vierte Schaltelement A, C, D als Bremse und das zweite und fünfte Schaltelement B, E als Kupplung ausgeführt sind. Die jeweiligen Reibbeläge der fünf Schaltelemente A bis E sind als Lamellenpakete 100, 200, 300, 400 und 500 (jeweils mit Außen- und Innenlamellen bzw. Stahl- und Belaglamellen) angedeutet. Die jeweiligen Eingangselemente der fünf Schaltelemente A bis E sind mit 120, 220, 320, 420 und 520 bezeichnet, die jeweiligen Ausgangselemente der Kupplungen B und E mit 230 und 530. Die kinematische Anbindung der einzelnen Radsatzelemente und Schaltelemente relativ zueinander und relativ zu Antriebs- und Abtriebswelle wurde bereits eingangs detailliert beschrieben, ebenso die räumliche Anordnung dieser Bauelemente.

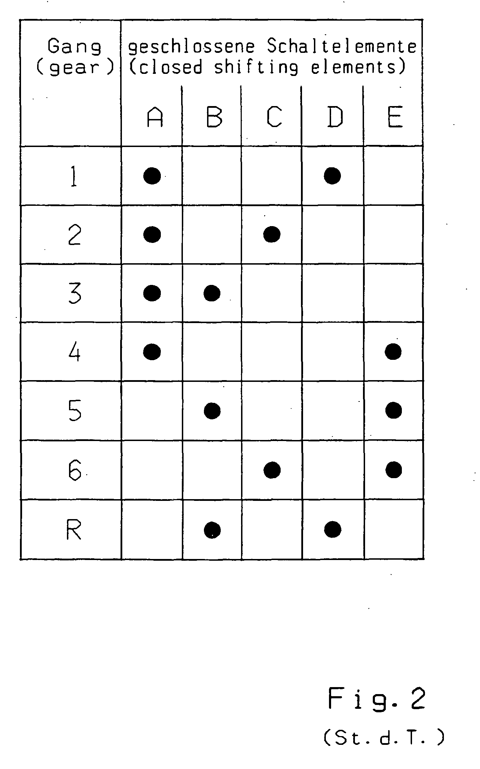

Wie aus dem Schaltschema in Fig. 2 ersichtlich, sind durch selektives Schalten von jeweils zwei der fünf Schaltelemente A bis E sechs Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. In dem ersten Gang "1" sind die Bremsen A und D geschlossen, in dem zweiten Gang "2" die Bremsen A und C, in dem dritten Gang "3" Bremse A und Kupplung B, in dem vierten Gang "4" Bremse A und Kupplung E, in dem fünften Gang "5" die Kupplungen B und E, und in dem sechsten Gang "6" Bremse C und Kupplung E. In einem Rückwärtsgang "R" sind Kupplung B und Bremse D geschlossen.

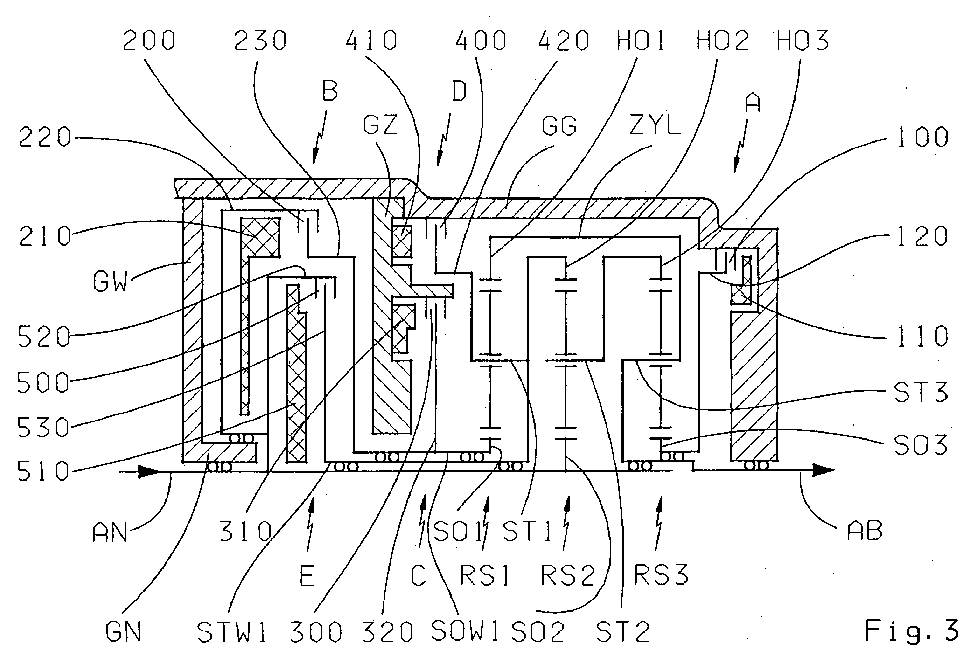

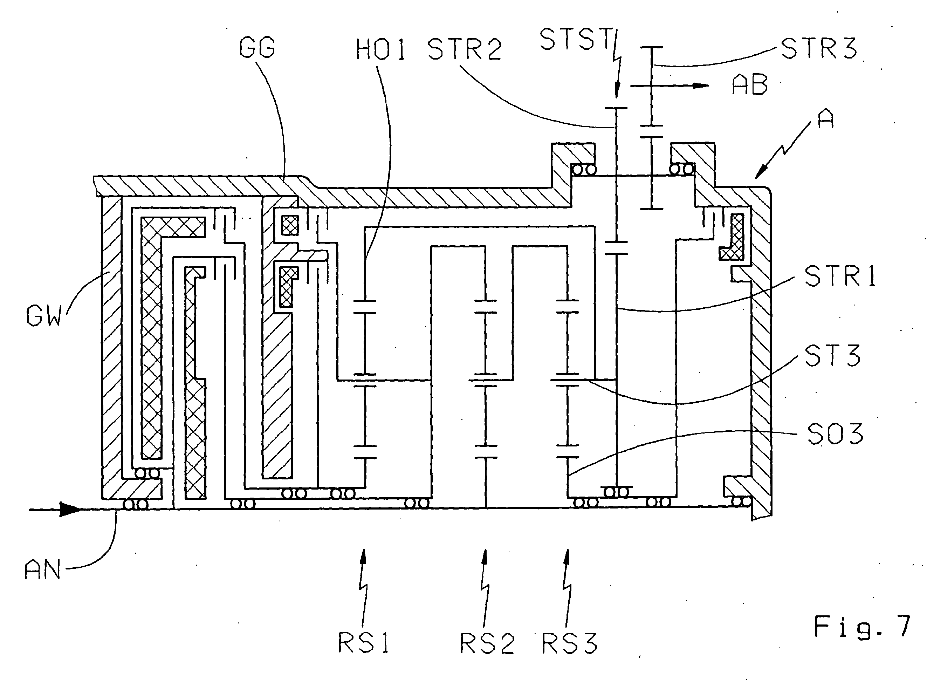

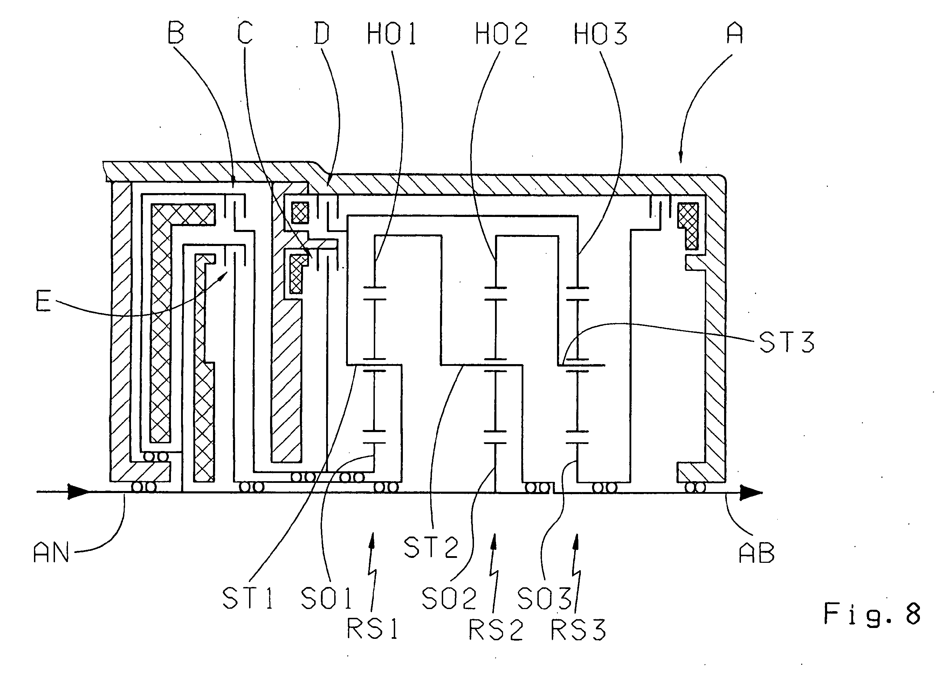

Anhand der Figuren 3 bis 6 werden im folgenden nun zwei Beispiele für eine erfindungsgemäße Bauteilanordnung im Detail erläutert, sowie anhand der Figuren 7 und 8 jeweils eine Variation zur relativen Anordnung von Antriebs- und Abtriebswelle und zur Koppelung einzelner Planetenradsatz-Elemente miteinander.

Fig. 3 zeigt nun eine erste schematische Bauteilanordnung, beispielhaft für die erfindungsgemäße Lösung der Aufgabe. Ausgehend vom zuvor beschriebenen Stand der Technik der DE 199 12 480 A1 weist das erfindungsgemäße Mehrstufen-Automatgetriebe drei gekoppelte, koaxial zueinander in Reihe angeordnete Einzel-Planetenradsätze RS1, RS2, RS3 auf, wobei der zweite Planetenradsatz RS2 axial zwischen dem ersten und dritten Planetenradsatz RS1, RS3 angeordnet ist. Weiterhin weist das Mehrstufen-Automatgetriebe fünf Schaltelemente A bis E auf. Das erste, dritte und vierte Schaltelement A, C, D ist jeweils als Bremse (im Beispiel jeweils als Lamellenbremse) ausgebildet, das zweite und fünfte Schaltelemenet B, E jeweils als Kupplung (im Beispiel jeweils als Lamellenkupplung). Ein Sonnenrad SO3 des dritten Planetenradsatzes RS3 ist über die Bremse A an einem Getriebegehäuse GG des Mehrstufen-Automatgetriebes festsetzbar. Eine Antriebswelle AN des Mehrstufen-Automatgetriebes ist ständig mit einem Sonnenrad SO2 des zweiten Planetenradsatzes RS2 verbunden. Weiterhin ist die Antriebswelle AN über die Kupplung B mit einem Sonnenrad SO1 des ersten Planetenradsatzes RS1 und zusätzlich oder alternativ über die Kupplung E mit einem Steg ST1 des ersten Planetenradsatzes RS1 verbindbar. Alternativ ist das Sonnenrad SO1 des ersten Planetenradsatzes RS1 über die Bremse C und/oder der Steg ST1 des ersten Planetenradsatzes RS1 über die Bremse D an dem Getriebegehäuse GG festsetzbar.

Eine Abtriebswelle AB des Mehrstufen-Automatgetriebes ist ständig mit einem Hohlrad HO1 des ersten Planetenradsatzes RS1 verbunden, wobei dieses Hohlrad HO1 bei der dargestellten beispielhaften Koppelung der Radsatzelemente zusätzlich ständig mit einem Steg ST3 des dritten Planetenradsatzes RS3 verbunden ist. Weiterhin ist ein Steg ST2 des zweiten Planetenradsatzes RS2 ständig mit einem Hohlrad HO3 des dritten Planetenradsatzes RS3 verbunden, sowie der Steg ST1 des ersten Planetenradsatzes RS1 ständig mit einem Hohlrad HO2 des zweiten Planetenradsatzes RS2. Das entsprechende Verbindungselement zwischen dem Hohlrad HO1 des ersten Planetenradsatzes RS1 und dem Steg ST3 des dritten Planetenradsatzes RS3 ist als Zylinder ZYL ausgebildet. Dieser Zylinder ZYL ist einerseits mit dem Hohlrad HO1 über eine geeignete Wirkverbindung verbunden, beispielsweise über eine Schweißverbindung, und erstreckt sich in axialer Richtung von dem Hohlrad HO1 bis über das Hohlrad HO3 hinüber. Andererseits ist der Zylinder ZYL auf der dem zweiten Planetenradsatz RS2 abgewandten Seite des dritten Planetenradsatzes RS3 über eine geeignete Wirkverbindung mit einem Stegblech STB3 des Stegs ST3 verbunden, beispielsweise über ein Mitnahmeprofil. Der Zylinder ZYL übergreift den zweiten und dritten Planetenradsatz RS2, RS3 also vollständig.

Der erste Planetenradsatz RS1 wird in axialer Richtung von zwei Wellen zentrisch vollständig durchgriffen, nämlich von einer als Hohlwelle ausgebildeten Stegwelle STW1 und der radial innerhalb dieser Stegwelle STW1 geführten Antriebswelle AN. Dabei ist die Stegwelle STW1 auf der dem zweiten Planetenradsatz RS2 zugewandten Seite des ersten Planetenradsatzes RS1 mit dem Steg ST1 des ersten Planetenradsatzes RS1 und mit dem Hohlrad HO2 des zweiten Planetenradsatzes verbunden, und auf der dem zweiten Planetenradsatz RS2 abgewandten Seite des ersten Planetenradsatzes RS1 mit einem Ausgangselement 530 der Kupplung E. Auf der dem zweiten Planetenradsatz RS2 abgewandten Seite des ersten Planetenradsatzes RS1 verläuft die Stegwelle STW1 radial innerhalb einer ebenfalls als Hohlwelle ausgebildeten Sonnenwelle SOW1. Diese Sonnenwelle SOW1 wiederum ist einerseits mit dem Sonnenrad SO1 des ersten Planetenradsatzes RS1 verbunden, andererseits auf der dem zweiten Planetenradsatz RS2 abgewandten Seite des ersten Planetenradsatzes RS1 mit einem Eingangselement 320 der Bremse C und einem Ausgangselement 230 der Kupplung B.

Der zweite, räumlich gesehen mittlere Planetenradsatz RS2 wird nur von der Antriebswelle AN in axialer Richtung zentrisch durchgriffen. Zur Erzielung einer günstigen Lagerung von Antriebs- und Abtriebswelle AN, AB im Bereich des dritten Planetenradsatzes RS3 erstreckt sich die Antriebswelle AN axial bis unter das Sonnenrad SO3 des dritten Planetenradsatzes RS3. Die Abtriebswelle AB ist in diesem Bereich radial auf der Antriebswelle AN gelagert, wobei die mit dem Hohlrad HO1 des ersten Planetenradsatzes RS1 wirkverbundene Abtriebswelle AB den dritten Planetenradsatz RS3 in axialer Richtung vollständig durchgreift. Das Sonnenrad SO3 des dritten Planetenradsatzes RS3 wiederum ist auf der Abtriebswelle AB gelagert.

Die Bremse A, über die das Sonnenrad SO3 des dritten Planetenradsatzes RS3 festsetzbar ist, ist räumlich gesehen auf der dem zweiten Planetenradsatz RS2 abgewandten Seite des dritten Planetenradsatzes RS3 angeordnet. Dabei grenzt ein als Innenlamellenträger ausgebildetes Eingangselement 120 der Bremse A axial an den Steg ST3 des dritten Planetenradsatzes RS3 an, auf dessen dem zweiten Planetenradsatz RS2 abgewandten Seite. Ein Lamellenpaket 100 der Bremse A mit Außen- und Belaglamellen ist auf großem Durchmesser im Bereich der dem dritten Planetenradsatzes RS3 abgewandten Außenwand des Getriebegehäuses GG angeordnet. Ein Mitnahmeprofil für die Außenlamellen des Lamellenpaketes 100 kann in einfacher Weise in das Getriebegehäuse GG integriert sein. Selbstverständlich kann für die Bremse A aber auch ein separater Außenlamellenträger vorgesehen sein, der über geeignete Mittel mit dem Getriebegehäuse GG form-, kraft- oder stoffschlüssig verbunden ist. Eine Servoeinrichtung 110 der Bremse A zur Betätigung der Lamellen 100 ist in einfacher Weise in die Außenwand des Getriebegehäuses GG integriert und betätigt die Lamellen 100 axial in Richtung der drei Planetenradsätze RS1, RS2, RS3, wobei diese Außenwand selbstverständlich auch als ein Gehäusedeckel ausgebildet sein kann, der mit dem Getriebegehäuse GG verbunden, beispielsweise verschraubt ist. Hierzu weist das Getriebegehäuse GG einen entsprechenden Kolbenraum (Druckraum) und einen darin verschiebbar gelagerten druckbeaufschlagbaren Kolben der Servoeinrichtung 110 auf, sowie eine entsprechende (hier nicht dargestellte) Druckmittelzufuhr zu diesem Kolbenraum. Die Kupplung A wird also vollständig von der Abtriebswelle AB in axialer Richtung zentrisch durchgriffen.

Die anderen vier Schaltelemente B bis E sind auf der dem zweiten Planetenradsatz RS2 abgewandten Seite des ersten Planetenradsatzes RS1 angeordnet, in dem in Fig. 3 dargestellten Beispiel auf der einem (zur Vereinfachung nicht dargestellten) mit der Antriebswelle AN wirkverbundenen Antriebsmotor zugewandten Seite des Automatgetriebes.

Wie in Fig. 3 ersichtlich, sind jeweils die beiden Bremsen C, D übereinander angeordnet und die beiden Kupplungen B, E. Dabei sind die beiden Bremsen C, D benachbart zum ersten Planetenradsatz RS1 angeordnet. Die beiden Kupplungen B, E hingegen sind benachbart zu einer mit dem Getriebegehäuse verbundenen Gehäusewand GW, die gleichzeitig eine (hier beispielhaft dem Antriebsmotor zugewandte) Außenwand des Automatgetriebes bildet, angeordnet.

Die Bremse D ist auf einem großen Durchmesser im Bereich des Innendurchmessers des Getriebegehäuses GG angeordnet, wobei das Getriebegehäuse beispielhaft gleichzeitig die Funktion eines Außenlamellenträgers für die Außenlamellen des Lamellenpaketes 400 der Bremse D übernimmt. Selbstverständlich kann auch ein separater Außenlamellenträger für die Bremse D vorgesehen sein, der dann über geeignete Mittel mit dem Getriebegehäuse verbunden ist. Die Lamellen 400 grenzen axial an den ersten Planetenradsatz RS1 an. Ein als topfförmiger Innenlamellenträger ausgebildetes Eingangselement 420 der Bremse D erstreckt sich unterhalb der Lamellen 400 axial in Richtung des ersten Planetenradsatzes RS1 und ist auf der Seite des ersten Planetenradsatzes RS1 mit dessen Steg ST1 verbunden, die dem zweiten Planetenradsatz RS2 gegenüberliegt. Eine Servoeinrichtung 410 der Bremse D zur Betätigung der Lamellen 400 ist in eine Gehäusezwischenwand GZ integriert. Diese Gehäusezwischenwand GZ schließt sich räumlich gesehen an das Lamellenpaket 400 auf dessen dem ersten Planetenradsatz RS1 abgewandten Seite an und ist mit dem Getriebegehäuse GG in geeigneter Weise - beispielsweise formschlüssig - verbunden. Bei einer Druckbeaufschlagung der Servoeinrichtung 410 werden die Lamellen 400 also axial in Richtung des ersten Planetenradsatzes RS1 betätigt.

Die Bremse C ist räumlich gesehen unterhalb der Bremse D angeordnet. Insbesondere ist das Lamellenpaket 300 der Bremse C in axialer Richtung gesehen zumindest überwiegend radial unterhalb des Lamellenpaketes 400 der Bremse D angeordnet. Die Lamellen 300 haben also einen kleineren Durchmesser als die Lamellen 400. Die mit dem Getriebegehäuse GG verbundene Zwischenwand GZ übernimmt gleichzeitig die Funktion eines Außenlamellenträgers für die Außenlamellen des Lamellenpaketes 300 der Bremse C. Ein Eingangselement 320 der Bremse C ist hier beispielhaft als Innenlamellenträger ausgebildet, der sich zumindest weitgehend scheibenförmig radial in Richtung Antriebswelle AN erstreckt und an seinem Innendurchmesser mit der Sonnenwelle SOW1 verbunden ist. Wie auch die Servoeinrichtung 410 der Bremse D, ist in die Gehäusezwischenwand GZ auch eine Servoeinrichtung 310 der Bremse C zur Betätigung der Lamellen 300 integriert. Räumlich gesehen ist diese Servoeinrichtung 310 radial unterhalb der Servoeinrichtung 410 angeordnet und betätigt bei Druckbeaufschlagung die Lamellen 300 axial in Richtung des ersten Planetenradsatzes RS1.

Die Gehäusezwischenwand GZ bildet also eine gut vormontierbare Baugruppe des Automatgetriebes, mit den Servoeinrichtungen 310, 410 beider Bremsen C, D inklusive der zugehörigen Druckmittelzuführungen, sowie mit dem Außenlamellenträger der Bremse C. In einer anderen Ausgestaltung kann auch vorgesehen sein, daß die Gehäusezwischenwand zusätzlich auch als Außenlamellenträger der radial äußeren Bremse D ausgebildet ist.

Auf der den beiden Bremsen C, D bzw. der dem ersten Planetenradsatz RS1 abgewandten Seite der Gehäusezwischenwand GZ sind die beiden Kupplungen B, E angeordnet. Hierbei wird die Gehäusezwischenwand GZ von den drei radial ineinander verlaufenden Wellen SOW1, STW1 und AN zentrisch durchgriffen. Die beiden Kupplungen B, E sind als Baugruppe ineinander verschachtelt, wobei die Kupplung E zumindest überwiegend innerhalb eines Kupplungsraums angeordnet ist, der durch einen Kupplungszylinder gebildet wird. In dem in Fig. 3 dargestellten Beispiel bildet ein als Außenlamellenträger ausgebildetes Eingangselement 220 der Kupplung B diesen Kupplungszylinder, in Form eines in Richtung zum ersten Planetenradsatz RS1 hin geöffneten Topfes, dessen Boden axial an die Gehäusewand GW angrenzt und an seinem Innendurchmesser mit der Antriebswelle AN verbunden ist. Eine Servoeinrichtung 210 der Kupplung B ist innerhalb dieses Kupplungszylinders (220) angeordnet und betätigt die Lamellen 200 der Kupplung B bei Druckbeaufschlagung axial in Richtung des ersten Planetenradsatzes RS1. Entsprechend ist ein Ausgangselement 230 der Kupplung B als Innenlamellenträger ausgebildet. Räumlich gesehen erstreckt sich dieser Innenlamellenträger (230) axial bis zur Gehäusezwischenwand GZ und - parallel angrenzend an die Gehäusezwischenwand GZ - radial nach innen bis zur Sonnenwelle SOW1, mit der er verbunden ist.

Das Eingangselement 520 der Kupplung E ist als Außenlamellenträger ausgeführt, in Form eines in Richtung zum ersten Planetenradsatz RS1 hin geöffneten topfförmigen Kupplungszylinders, mit einem Boden radialer Erstreckung, der axial an die Servoeinrichtung 210 der Kupplung B angrenzt und an seinem Innendurchmesser mit der Antriebswelle AN verbunden ist, sowie mit einem zylindrischen Abschnitt, der sich in axialer Richtung radial unterhalb des Lamellenpaketes 200 der Kupplung B erstreckt und an seinem Innendurchmesser Außenlamellen des Lamellenpaketes 500 der Kupplung E aufnimmt. Räumlich gesehen sind die Lamellen 500 dabei zumindest teilweise in axialer Richtung radial unterhalb der Lamellen 200 der Kupplung B angeordnet, also auf kleinerem Durchmesser als die Lammellen 200 der Kupplung B. Eine Servoeinrichtung 510 der Kupplung E ist innerhalb des Kupplungszylinders (520) der Kupplung E angeordnet und betätigt die Lamellen 500 der Kupplung E bei Druckbeaufschlagung axial in Richtung des ersten Planetenradsatzes RS1. Entsprechend ist ein Ausgangselement 530 der Kupplung E als Innenlamellenträger ausgebildet. Räumlich gesehen erstreckt sich dieser Innenlamellenträger (530) parallel zur Gehäusezwischenwand GZ radial nach innen bis zur Stegwelle STW1, mit der er verbunden ist, und grenzt dabei abschnittsweise axial an den Innenlamellenträger (230) der Kupplung B an.

Beide Servoeinrichtungen 210, 510 der Kupplungen B, E rotieren also stets mit einer Drehzahl der Antriebswelle AN und können mit einfachen Mitteln dynamisch druckausgeglichen sein. In dem in Fig. 3 dargestellten Getriebeschema ist die kinematische Anbindung der beiden Eingangselemente 220, 520 der Kupplungen B, E an die Antriebswelle AN beispielhaft derart ausgeführt, daß eine gemeinsame Nabe der Eingangselemente 220, 520 an einem Vorsprung der Gehäusewand GW gelagert ist, der sich axial in den Innenraum des Getriebegehäuses GG erstreckt. Die Druckmittelzuführung mit entsprechenden Kanälen zu den beiden Servoeinrichtungen 210 und 510 der Kupplungen B, E kann beispielsweise in relativ einfacher Weise über diesen Vorsprung der Gehäusewand GW und diese gemeinsame Nabe geführt sein.

Durch die in Fig. 3 dargestellte Bauteilanordnung wird ein räumlich gesehen insgesamt sehr kompakter Getriebeaufbau erzielt. Die Lamellen 200 der thermisch hoch belasteten Kupplung B sind auf einem vorteilhaft großen Durchmesser angeordnet, ebenso die Lamellen 400 der statisch von allen fünf Schaltelementen am höchsten belasteten Bremse D.

Das Schaltschema des Mehrstufen-Automatgetriebes gemäß Fig. 3 entspricht dem in Fig. 2 dargestellten Schaltschema. Wie beim Stand der Technik der DE 199 12 480 A1 sind durch selektives Schalten von jeweils zwei der fünf Schaltelemente also sechs Vorwärtsgänge gruppenschaltungsfrei schaltbar.

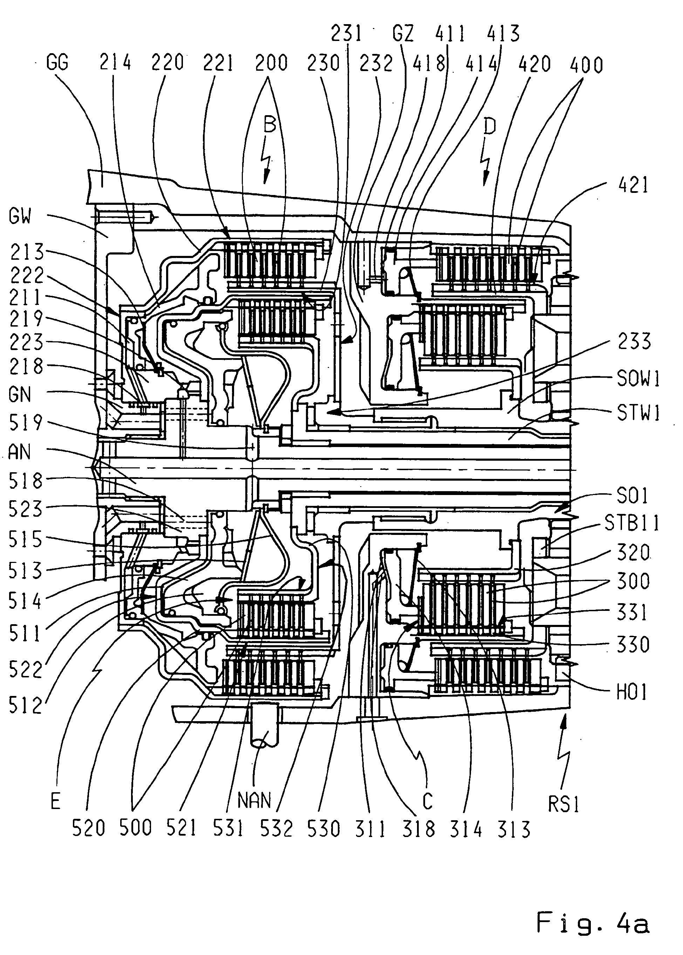

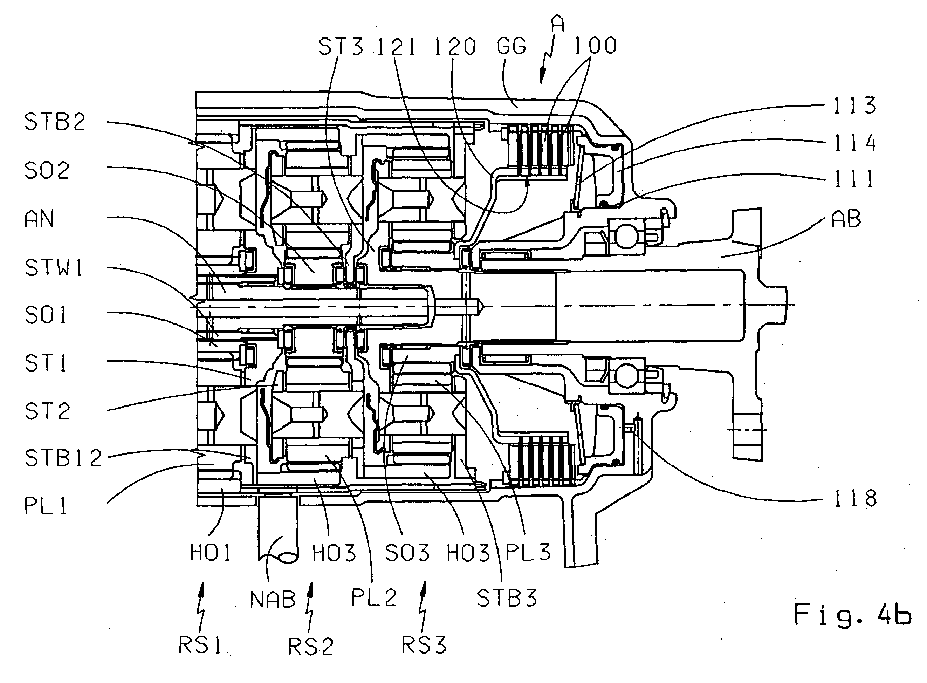

Anhand Fig. 4 wird nun eine praktisch ausgeführte Getriebekonstruktion erläutert, bei der die kinematische Koppelung und die räumliche Anordnung der drei Einzel-Planetenradsätze RS1, RS2, RS3 und der fünf Schaltelemente A bis E innerhalb des Getriebegehäuses GG und relativ zueinander im Prinzip der in Fig. 3 schematisch dargestellten Skizze entspricht. Entsprechend der in diesem Beispiel koaxialen Anordnung von Antriebs- und Abtriebswelle AN, AB ist das Automatgetriebe für ein Kraftfahrzeug mit Standard-antrieb vorgesehen. Zur besseren Darstellung ist der Getriebeschnitt in zwei Teilschnitten auf zwei Figuren Fig. 4a und Fig. 4b aufgeteilt, wobei der dem (nicht dargestellten) Antriebsmotor zugewandte Teil des Automatgetriebes in Fig. 4a und der abtriebsseitige Teil des Automatgetriebes in Fig. 4b abgebildet ist.

Wie in Fig. 4a ersichtlich, ist eine Gehäusewand GW mit dem Getriebegehäuse GG verschraubt und bildet eine Außenwand in Richtung eines (hier nicht dargestellten) Antriebsmotors bzw. in Richtung eines eventuell vorhandenen, außerhalb des Getriebegehäuses GG angeordneten Anfahrelementes (beispielsweise ein Drehmomentwandler oder eine Anfahrkupplung) des Automatgetriebes. Diese Gehäusewand GW weist im einzelnen nicht näher erläuterte Druckmittelkanäle auf und kann beispielsweise auch eine Ölpumpe zur Druck- und Schmiermittelversorgung des Automatgetriebes aufnehmen. Axial in Richtung Innenraum des Getriebegehäuses GG erstreckt sich eine mit der Gehäusewand GW fest verbundene Nabe GN. Diese Nabe GN kann beispielsweise ein Teil einer Leitradwelle eines Drehmomentwandlers sein. In einer anderen Ausgestaltung können Nabe GN und Gehäusewand GW aber auch einstückig ausgeführt sein. In noch einer anderen Ausgestaltung können auch Getriebegehäuse GG und Gehäusewand GW oder auch Getriebegehäuse GG und Gehäusewand GW und Nabe GW einstückig ausgeführt sein. Radial innerhalb der Nabe GN verläuft die Antriebswelle AN des Automatgetriebes und durchdringt dabei die Gehäusewand GW zentrisch.

Auf der Nabe GN ist eine Nabe 223 eines Eingangselementes 220 der Kupplung B gelagert. Dieses Eingangselement 220 ist als Außenlamellenträger ausgebildet, in Form eines in zur Gehäusewand GW entgegengesetzter Richtung hin geöffneten Topfes. An die Nabe 223 schließt sich ein zumindest teilweise scheibenförmiger Abschnitt 222 des Eingangselementes 220 an und erstreckt sich radial nach außen. An diesen zumindest teilweise scheibenförmigen Abschnitt 222 schließt sich ein zumindest überwiegend zylindrischer Abschnitt 221 des Eingangselementes 220 an und erstreckt sich axial in zur Gehäusewand GW entgegengesetzter Richtung bis über ein Lamellenpaket 200 der Kupplung B mit Innen- und Außenlamellen. An seinem Innendurchmesser weist der zylindrische Abschnitt 221 ein geeignetes Mitnahmeprofil auf zur Aufnahme der Außenlamellen des Lamellenpaketes 200. Das Lamellenpaket ist auf einem großen Durchmesser angeordnet, nahe an einem Innendurchmesser des Getriebegehäuses GG. Innerhalb des Außenlamellenträgers (220) der Kupplung B ist eine Servoeinrichtung zur Betätigung der Kupplung B angeordnet. Ein Kolben 214 dieser Servoeinrichtung grenzt dabei an den Außenlamellenträger-Abschnitt 222 an und bildet zusammen mit dem Außenlamellenträger-Abschnitt 222 einen Druckraum 211 der Servoeinrichtung der Kupplung B. Bei einer Druckbeaufschlagung dieses Druckraums 211 über eine entsprechende Druckzuführung 218 betätigt der Kolben 214 die Lamellen 200 in zur Gehäusewand GW entgegengesetzter Richtung, gegen eine Rückstellkraft eines hier beispielsweise als Tellerfeder ausgebildeten Rückstellelementes 213. Die Druckzuführung 218 verläuft zumindest zum Teil in der getriebegehäusefesten Nabe GN. Die Kupplung B umfaßt auch einen dynamischen Druckausgleich, der später genauer beschrieben wird.

Wie in Fig. 4a ersichtlich, sind die Kupplungen B, E als Baugruppe ineinander verschachtelt. Dabei ist die Kupplung E zumindest annähernd vollständig innerhalb eines Kupplungsraums der Kupplung B angeordnet, der durch den Außenlamellenträger 220 (Kupplungszylinder) der Kupplung B gebildet wird. Ein Lamellenpaket 500 mit Außen- und Belaglamellen der Kupplung E ist räumlich gesehen fast vollständig unterhalb des Lamellenpaketes 200 der Kupplung B angeordnet. Ein Eingangselement 520 der Kupplung E ist als Außenlamellenträger ausgebildet, in Form eines in zur Gehäusewand GW entgegengesetzter Richtung hin geöffneten Topfes. Am Innendurchmesser eines zumindest überwiegend zylindrischen Abschnitts 521 dieses Außenlamellenträgers (520) ist ein geeignetes Mitnahmeprofil vorgesehen zur Aufnahme der Außenlamellen des Lamellenpaketes 500. Auf der der Gehäusewand GW zugewandten Seite dieses zylindrischen Abschnitts 521 schließt sich ein zumindest teilweise scheibenförmiger Abschnitt 522 dieses Außenlamellenträgers (520) an den zylindrischen Abschnitt 521 an und erstreckt sich - angrenzend an Kolben 214 und Rückstellelement 213 der Kupplung B - radial nach innen, bis zu einer Nabe 523, mit der er fest verbunden ist. Bei dieser beispielhaften Ausgestaltung der drehmomentfesten Anbindung des Eingangselementes 520 der Kupplung E an die Antriebswelle AN ist diese Nabe 523 einstückig mit der Antriebswelle AN ausgeführt, also als ein nabenförmiger Abschnitt der Antriebswelle AN. In einer anderen Ausgestaltung kann die Nabe 523 aber auch als separates Bauelement ausgebildet sein, das fest mit dem scheibenförmigen Abschnitt 522 des Außenlamellenträgers 520 verbunden ist. In dem in Fig. 4a dargestellten Beispiel weist die Nabe 523 der Antriebswelle AN zudem ein Mitnahmprofil auf, über welches die Nabe 223 des Eingangselementes 220 der Kupplung B formschlüssig mit der Antriebswelle AN verbunden ist.

Eine Servoeinrichtung zur Betätigung der Kupplung E ist innerhalb des Außenlamellenträgers (520) der Kupplung E angeordnet. Ein Kolben 514 dieser Servoeinrichtung grenzt dabei an den Außenlamellenträger-Abschnitt 522 an und bildet zusammen mit dem Außenlamellenträger-Abschnitt 522 einen Druckraum 511 der Servoeinrichtung der Kupplung E. Bei einer Druckbeaufschlagung dieses Druckraums 511 über eine entsprechende Druckzuführung 518 betätigt der Kolben 514 die Lamellen 500 in zur Gehäusewand GW entgegengesetzter Richtung, gegen eine Rückstellkraft eines hier beispielsweise als Tellerfeder ausgebildeten Rückstellelementes 513. Die Betätigungsrichtung beider Kupplungen B und E sind also gleich. Die Druckzuführung 218 verläuft zumindest zum Teil in der getriebegehäusefesten Nabe GN.

Wie bereits beschrieben, rotieren die Eingangselemente 220, 520 beider Kupplung B, E stets mit einer Drehzahl der Antriebswelle AN. Zum Ausgleich des jeweiligen dynamischen Druckes aufgrund der Rotation der druckmittelbefüllten Druckräume 211, 511 ist für beide Kupplungen B, E ein dynamischer Druckausgleich vorgesehen. Die Kupplung B weist hierzu einen Druckausgleichsraum 212 auf, der auf der dem Druckraum 211 abgewandten Seite des Kolbens 214 angeordnet ist und gebildet wird durch den Kolben 214, einen Abschnitt der Nabe 219 und den Außenlamellenträger 520 der Kupplung E. Der Kolben 214 der Kupplung B ist also auch gegenüber dem Außenlamellenträger 520 der Kupplung E hin axial verschiebbar abgedichtet. Drucklos befüllt wird der Druckausgleichsraum 212 über eine Schmiermittelzuführung 219. Für den dynamischen Druckausgleich der Kupplung E ist ein Druckausgleichsraum 512 vorgesehen, der auf der dem Druckraum 511 abgewandten Seite des Kolbens 514 angeordnet ist und gebildet wird durch den Kolben 514 und eine Stauscheibe 515. Kolben 514 und Stauscheibe 515 sind dabei gegeneinander axial verschiebbar abgedichtet, wobei die Stauscheibe 515 axial an der Antriebswelle AN fixiert ist, im dargestellten Beispiel über eine Vorspannkraft des Rückstellelementes 513 des Kupplung E, durch die die Stauscheibe 515 gegen einen in eine korrespondierende Antriebswellen-Nut eingreifenden Sicherungsring gedrückt wird.

Zur obligatorischen Messung der Drehzahl der Antriebswelle AN ist ein entsprechender Antriebsdrehzahlsensor NAN üblicher Bauart vorgesehen, der ein entsprechend ausgebildetes Geberprofil am Außendurchmesser des Eingangselementes 220 der Kupplung B vorzugsweise berührungslos abtastet.

Ein Ausgangselement 230 der Kupplung B ist als Innenlamellenträger ausgebildet, mit einem zylindrischen Abschnitt 231, an dessen Außendurchmesser ein geeignetes Mitnahmeprofil vorgesehen ist zur Aufnahme der Belaglamellen des Lamellenpaketes 200, sowie mit einem scheibenförmigen Abschnitt 232, der sich an den zylindrischen Abschnitt 231 auf dessen dem Kolben 214 abgewandten Seite anschließt und sich radial nach innen erstreckt, bis zu einer Hohlnabe 233, mit der er fest verbunden ist. Diese Hohlnabe 233 erstreckt sich axial in zur Kupplung B abgewandten Richtung und ist hier beispielhaft über ein Mitnahmeprofil mit einer Sonnenwelle SOW1 verbunden zur kinematischen Koppelung des Ausgangselementes 230 der Kupplung B mit dem Sonnenrad SO1 des ersten Planetentradsatzes RS1. Das Ausgangselement 230 der Kupplung B übergreift das Lamellenpaket 500 der Kupplung E in axialer Richtung also vollständig.

Ein Ausgangselement 530 der Kupplung E ist als Innenlamellenträger ausgebildet. Ein zylindrischer Abschnitt 531 dieses Innenlamellenträgers (530) erstreckt sich zumindest teilweise axial oberhalb der Stauscheibe 515 und weist an seinem Außendurchmesser ein geeignetes Mitnahmeprofil auf zur Aufnahme der Belaglamellen des Lamellenpaketes 500. Auf der dem Kolben 514 abgewandten Seite des zylindrischen Abschnitt 531 schließt sich ein scheibenförmiger Abschnitt 532 des Innenlamellenträgers (530) an den zylindrischen Abschnitt 531 an und erstreckt sich - parallel angrenzend an den scheibenförmigen Abschnitt 233 des Innenlamellenträgers (230) der Kupplung B - radial nach innen, bis zu einer Stegwelle STW1, mit der er fest verbunden ist. Selbstverständlich kann diese Verbindung zwischen Innenlamellenträger 530 und Stegwelle STW1 auch formschlüssig ausgeführt sein. Die Stegwelle STW1 übernimmt die kinematische Koppelung des Ausgangselement 530 der Kupplung E mit dem Steg ST1 des ersten Planetenradsatzes RS1. Dabei ist die Stegwelle STW1 als Hohlwelle ausgeführt, die einerseits radial innerhalb der Nabe 233 des Ausgangselementes der Kupplung B bzw. der Sonnenwelle SOW1 verläuft und diese zentrisch durchgreift, andererseits von der Antriebswelle AN zentrisch durchgriffen wird.

Weiter in Richtung Innenraum des Getriebegehäuses GG gesehen, also auf der der Gehäusewand GW abgewandten Seite der verschachtelten Kupplungsanordnung mit den beiden Kupplungen B und E, schließt sich eine Gehäusezwischenwand GZ an diese Kupplungsanordnung an. Dabei grenzt diese Gehäusezwischenwand GZ unmittelbar an das Lamellenpaket 200 und den scheibenförmigen Abschnitt 232 des Ausgangselementes 230 der Kupplung B an. Die radial ineinander verlaufenden drei Wellen SOW1, STW1 und AN durchgreifen die Gehäusezwischenwand GZ zentrisch.

Wie in Fig. 4a weiterhin ersichtlich, sind die beiden Bremsen D und C räumlich gesehen übereinander angeordnet, wobei die Bremse D räumlich gesehen das äußere Schaltelement der beiden Bremsen C, D ist. Ein Lamellenpaket 400 mit Außen- und Belaglamellen der Bremse D grenzt auf der den beiden Kupplungen B, E gegenüberliegenden Seite der Gehäusezwischenwand GZ axial an die Gehäusezwischenwand GZ an. Das Getriebegehäuse GG nimmt in diesem räumlichen Abschnitt gleichzeitig die Funktion eines Außenlamellenträgers der Bremse D wahr und weist hierzu an seinem Innendurchmesser ein geeignetes Mitnahmeprofil auf zur Aufnahme der Außenlamellen des Lamellenpaketes 400. Auf diese Weise wird ein möglichst großer Lamellendurchmesser für die Bremse D erzielt, die konzeptbedingt von allen fünf Schaltelementen statisch am höchsten belastet ist. Selbstverständlich kann der Außenlamellenträger der Bremse D auch als separates Bauelement ausgeführt sein, das dann über geeignete drehmomentübertragende Mittel mit dem Getriebegehäuse GG verbunden ist.

Eine Servoeinrichtung der Bremse D ist in die Gehäusezwischenwand GZ integriert. Ein Kolben 414 dieser Servoeinrichtung ist axial verschiebbar in einem entsprechenden Kolbenraum der Gehäusezwischenwand GZ angeordnet und bildet zusammen mit diesem einen Druckraum 411. Zur Betätigung der Bremse D wird der Druckraum 411 über eine ebenfalls in der Gehäusezwischenwand GZ integrierte Drückmittelzuführung 418 mit Druckmittel befüllt, wodurch der Kolben 414 die Lamellen 400 der Bremse D gegen eine Rückstellkraft eines hier beispielhaft als Tellerfeder ausgeführten Rückstellelementes 413 in zur Gehäusewand GW abgewandter Richtung hin betätigt.

Ein Eingangselement 420 der Bremse D ist als zylinderförmiger Innenlamellenträger ausgebildet und ist räumlich gesehen zumindest überwiegend radial unterhalb des Lamellenpaketes 400 der Bremse D angeordnet. Am Außendurchmesser seines zylindrischen Abschnitts 421 ist ein geeignetes Mitnahmeprofil vorgesehen zur Aufnahme der Belaglamellen des Lamellenpaketes 400. Kinematisch ist der Innenlamellenträger (420) der Bremse D an den Stegs ST1 des ersten Planetenradsatzes RS1 angekoppelt. Hierzu ist der zylindrische Abschnitt 421 auf der dem Kolben 414 bzw. der Gehäusezwischenwand GZ abgewandten Seite des Lamellenpaketes 400 mit einem ersten (antriebsmotorseitigen) Stegblech STB11 des Stegs ST1 verbunden, wobei Innenlamellenträger (420) der Bremse D und Stegblech STB11 hier beispielhaft einstückig ausgeführt sind. Selbstverständlich können Innenlamellenträger 420 und Stegblech STB11 in einer anderen Ausgestaltung auch als separate Bauteile ausgeführt sein, die dann formschlüssig oder kraftschlüssig oder stoffschlüssig miteinander verbunden sind.

Räumlich gesehen ist die Bremse C vollständig radial unterhalb der Bremse D angeordnet. Dabei ist das Lamellenpaket 300 mit Außen und Belaglamellen der Bremse C zumindest überwiegend in axialer Richtung gesehen radial unterhalb des Lamellenpaketes 400 der Bremse D angeordnet. Das Eingangselement 420 der Bremse D übergreift also das Lamellenpaket 300 der Bremse C. Ein Ausgangselement 330 der Bremse C ist als Außenlamellenträger ausgebildet, mit einem zylinderförmigen Abschnitt 331, der an seinem Innendurchmesser ein geeignetes Mitnahmeprofil aufweist zur Aufnahme der Außenlamellen des Lamellenpaketes 300. In konstruktiv einfacher Weise ist dieser Außenlamellenträger 330 in die Gehäusezwischenwand GZ integriert, als zylinderförmiger Vorsprung, der sich radial unterhalb des Lamellenpaketes 400 der Bremse D axial in Richtung des ersten Planetenradsatzes RS1 erstreckt.

Eine Servoeinrichtung der Bremse C ist ebenfalls in die Gehäusezwischenwand GZ integriert, radial unterhalb der Servoeinrichtung der Bremse D. Ein Kolben 314 der Servoeinrichtung der Bremse C ist axial verschiebbar in einem entsprechenden Kolbenraum der Gehäusezwischenwand GZ angeordnet und bildet zusammen mit diesem einen Druckraum 311. Der Kolben 314 der Bremse C ist also radial unterhalb des Kolbens 414 der Bremse D angeordnet. Zur Betätigung der Bremse C wird der Druckraum 311 über eine ebenfalls in der Gehäusezwischenwand GZ integrierte Drückmittelzuführung 318 mit Druckmittel befüllt, wodurch der Kolben 314 die Lamellen 300 der Bremse C gegen eine Rückstellkraft eines hier beispielhaft als Tellerfeder ausgeführten Rückstellelementes 313 in zur Gehäusewand GW abgewandter Richtung hin betätigt. Die Betätigungsrichtung der beiden Bremsen C, D ist also gleich.

Ein Eingangselement 320 der Bremse C ist als zylinderförmiger Innenlamellenträger ausgebildet, ist räumlich gesehen zumindest überwiegend radial unterhalb des Lamellenpaketes 300 der Bremse C angeordnet, weist an seinem Außendurchmesser ein geeignetes Mitnahmeprofil auf zur Aufnahme der Belaglamellen des Lamellenpaketes 3.00, und ist auf der dem Kolben 314 bzw. der Gehäusezwischenwand GZ abgewandten Seite des Lamellenpaketes 300 kinematisch an das Sonnenrad SO1 des ersten Planetenradsatzes RS1 angekoppelt. In der in Fig. 4a dargestellten beispielhaften Konstruktion ist der Innenlamellenträger (320) der Bremse C hierzu fest mit der Sonnenwelle SOW1 verbunden, welche die Gehäusezwischenwand GZ wie zuvor schon beschrieben zentrisch durchgreift. Im dargestellten Beispiel ist diese Sonnenwelle SOW1 einerseits formschlüssig mit der Nabe 233 des Ausgangselementes 230 der Kupplung B, die auf der der Bremse C abgewandten Seite der.Gehäusezwischenwand GZ angeordnet ist, verbunden, andererseits auf der der Gehäusezwischenwand GZ gegenüberliegenden Seite des Lamellenpaketes 300 der Bremse C mit dem Sonnenrad SO1 des ersten Planetenradsatzes RS1. Selbstverständlich kann die drehmomentübertragende Verbindung zwischen Innenlamellenträger 320 der Bremse C und Sonnenrad SO1 und Ausgangselementes 230 der Kupplung B konstruktiv auch anders ausgeführt sein, beispielsweise mit einer formschlüssigen Verbindung zwischen Innenlamellenträger der Bremse C und Sonnenwelle und/oder mit einstückiger Ausbildung von Sonnenrad des ersten Planetenradsatzes RS1 und Sonnenwelle und/oder mit einstückiger Ausbildung von Nabe des Ausgangselementes der Kupplung B und Sonnenwelle.

Wie aus Fig. 4a ersichtlich, ergibt sich durch die vorgeschlagene Bauteilanordnung für die vier Schaltelemente B, E, C, D zusammen auf einer Seite des ersten Planetenradsatzes RS1, die dem Antriebsmotor des Automatgetriebes zugewandt ist, ein sehr kompakter Getriebeaufbau, bei optimaler Baugröße für die beiden thermisch bzw. statisch hoch belasteten Schaltelemente B und D.

Fig. 4b zeigt nun den abtriebsseitigen Teilschnitt des erfindungsgemäßen Konstruktionsbeispiels gemäß Fig. 4. Der Steg ST1 des ersten Planetenradsatzes RS1 weist ein zweites Stegblech STB12 auf, welches auf der dem ersten Stegblech STB11 gegenüberliegenden Seite der Planetenräder PL1 angeordnet ist. Dieses abtriebsseitig angeordnete zweite Stegblech STB12 ist mit der Stegwelle STW1, welche das Sonnenrad SO1 des ersten Planetenradsatzes RS1 zentrisch vollständig durchgreift, formschlüssig verbunden. Dabei ist die Stegwelle STW1 im Bereich des Stegblechs STB12 auf der Antriebswelle AN gelagert.

In Richtung Abtrieb gesehen schließt sich der zweite Planetenradsatz RS2 axial unmittelbar an den ersten Planetenradsatz RS1 an. Der Steg ST2 des zweiten Planetenradsatzes RS2 mit seinen Planetenrädern PL2 grenzt axial an das zweite Stegblech STB12 des ersten Planetenradsatzes RS1 an. Das zweite Stegblech STB12 des ersten Planetenradsatzes RS1 ist an seinem Außendurchmesser mit dem Hohlrad HO2 des zweiten Planetenradsatzes RS2 fest verbunden. Das Sonnenrad SO2 des zweiten Planetenradsatzes RS2 ist formschlüssig mit der Antriebswelle AN verbunden, wobei die Antriebswelle AN das Sonnenrad SO2 zentrisch vollständig durchgreift und sich bis unter den dritten Planetenradsatz RS3 erstreckt, welcher sich in Richtung Abtrieb gesehen axial unmittelbar an den zweiten Planetenradsatz RS2 anschließt.

Auf seiner dem dritten Planetenradsatz RS3 zugewandten Seite weist der Steg ST2 des zweiten Planetenradsatzes RS2 ein Stegblech STB2 auf, an das der Steg ST3 des dritten Planetenradsatzes RS3 mit seinen Planetenrädern PL3 axial angrenzt. Das Stegblech STB2 des zweiten Planetenradsatzes RS2 ist an seinem Außendurchmesser mit dem Hohlrad HO3 des dritten Planetenradsatzes RS3 fest verbunden. Der an das Stegblech STB2 angrenzende Steg ST3 erstreckt sich radial nach innen bis zur Antriebswelle AN, auf der er gelagert ist, durchgreift das Sonnenrad SO3 des dritten Planetenradsatzes RS3 zentrisch vollständig und ist auf seiner dem zweiten Planetenradsatz RS2 abgewandten Seite mit der Abtriebswelle AB des Automatgetriebes über ein geeignetes Mitnahmeprofil formschlüssig verbunden. Das Sonnenrad SO3 ist dabei auf dem zylindrischen Abschnitt des Stegs ST3 gelagert, der das Sonnenrad SO3 zentrisch durchgreift. Diese Radial-Lagerung von Sonnenrad SO3 und Steg ST3 erstreckt sich in axialer Richtung gesehen zumindest abschnittsweise radial oberhalb der zuvor erwähnten Radial-Lagerung von Antriebswelle AN und Steg ST3, wodurch eine insgesamt gute Radialkraftabstützung erzielt wird.

Weiterhin weist der Steg ST3 des dritten Planetenradsatzes RS3 auf seiner dem zweiten Planetenradsatz RS2 abgewandten Seite ein Stegblech STB3 auf, das sich radial nach außen erstreckt bis auf einen Durchmesser größer dem Hohlrad HO3. An seinem Außendurchmesser ist dieses Stegblech STB3 in einen Zylinder ZYL formschlüssig eingehängt. Dieser Zylinder ZYL erstreckt sich in axialer Richtung von dem Hohlrad HO1 des ersten Planetenradsatzes RS1 bis über das Hohlrad HO3 des dritten Planetenradsatzes RS3 und ist mit dem Hohlrad HO1 fest verbunden. Der Zylinder ZYL übergreift also den zweiten und dritten Planetenradsatz RS1 und RS2 in axialer Richtung radial vollständig. Die Drehmomentanbindung des Hohlrades HO1 an die Abtriebswelle AN erfolgt also über den Steg ST3 des dritten Planetenradsatzes RS3 und den axialen Durchgriff des Stegs ST3 zentrisch unterhalb des Sonnenrades SO3 des dritten Planetenradsatzes RS3 hindurch. Selbstverständlich kann die drehmomentübertragende Verbindung zwischen Hohlrad HO1 und Zylinder ZYL konstruktiv auch anders ausgeführt sein, beispielsweise als einstückige Ausführung von Hohlrad HO1 und Zylinder ZYL oder als formschlüssige Verbindung. Selbstverständlich kann auch ebenso die drehmomentübertragene Verbindung zwischen Zylinder ZYL und Stegblech STB3 konstruktiv anders ausgeführt sein, beispielsweise als einteilige Ausführung von Zylinder ZYL und Stegblech STB3 oder als stoffschlüssige Verbindung.

Die hier koaxial zur Antriebswelle AN verlaufende Abtriebswelle AB ist in einer abtriebsseitigen Wand des Getriebegehäuses GG gelagert und durchdringt diese Wand in Richtung eines hier nicht dargestellten Antriebsstrangs, der mit der Abtriebswelle wirkverbunden ist. Zur Erzielung einer steifen Lagerung der Abtriebswelle AN im Getriebegehäuse GG sind zwei Lager mit relativ großem axialen Abstand vorgesehen, wobei das dem dritten Planetenradsatz RS3 benachbarte Lager an bzw. in einem Gehäusevorsprung angeordnet ist, der sich ausgehend von der abtriebsseitigen Wand des Getriebegehäuses GG axial in den Innenraum des Getriebegehäuses GG in Richtung des dritten Planetenradsatzes RS3 erstreckt. Zur einfachen Messung einer Drehzahl der Abtriebswelle AB ist ein Drehzahlsensor NAB üblicher Bauart vorgesehen, der ein entsprechend ausgebildetes Geberprofil am Außendurchmesser des Zylinders ZYL vorzugsweise berührungslos abtastet. Selbstverständlich können auch zwei derartige Abtriebsdrehzahlsensoren bzw. ein aus zwei Sensoren kombinierter Abtriebsdrehzahlsensor vorgesehen sein, um zusätzlich zur absoluten Drehzahl der Abtriebswelle AB auch deren Drehrichtung zu bestimmen.

Wie aus Fig. 4b leicht ersichtlich, ist diese Anordnung der drei Planetenradsätze RS1, RS2, RS3 in Reihe nebeneinander ausgesprochen kompakt und fertigungstechnisch sehr günstig.

Räumlich gesehen ist die Bremse A auf der dem zweiten Planetenradsatz RS2 abgewandten Seite des dritten Planetenradsatzes RS3 angeordnet, also an der Abtriebsseite des Getriebegehäuses GG. Hierbei grenzt ein Lamellenpaket 100 mit Außen- und Belaglamellen der Bremse A axial unmittelbar an das Stegblech STB3 des dritten Planetenradsatzes RS3 an. Das Sonnenrad SO3 des dritten Planetenradsatzes RS3 ist auf seiner dem zweiten Planetenradsatz RS2 abgewandten Seite mit einem als Innenlamellenträger ausgebildeten Eingangselement 120 der Bremse A verbunden, im dargestellten Beispiel mittels Schweißverbindung. In einer anderen Ausgestaltung kann das Eingangselement 120 der Bremse A auch in ein entsprechend ausgebildetes Mitnahmeprofil des Sonnenrades SO3 eingehängt sein. Das hier als in Richtung Getriebeabtrieb offener Stahlblechtopf ausgebildete Eingangselement 120 weist an seinem zylindrischen Abschnitt 121 ein Mitnahmeprofil zur Aufnahme der Belaglamellen des Lamellenpaketes 100 auf. Dabei ist dieses Lamellenpaket 100 auf einem vergleichsweise großen Durchmesser angeordnet, räumlich gesehen etwa auf dem Durchmesser des Hohlrades HO3 des dritten Planetenradsatzes RS3. Das Getriebegehäuse GG weist in diesem Bereich ein Mitnahmeprofil zur Aufnahme der Außenlamellen des Lamellenpaketes 100 auf, übernimmt also in fertigungs- und montagetechnisch günstiger Weise gleichzeitig die Funktion eines Außenlamellenträgers für die Bremse A. Selbstverständlich kann in einer anderen Ausgestaltung auch ein separater Außenlamellenträger für die Bremse A vorgesehen sein, der dann über geeignete Mittel mit dem Getriebegehäuse verbunden ist.

Eine Servoeinrichtung der Bremse A ist in fertigungs- und montagetechnisch günstiger Weise ebenfalls direkt in das Getriebegehäuse GG integriert. Hierzu weist die abtriebsseitige Außenwand des Getriebegehäuses GG einen entsprechenden Kolben- bzw. Druckraum 111 auf, sowie entsprechende Druckmittelkanäle 118 für diesen Druckraum 111. In diesem Kolbenraum ist ein druckbeaufschlagbarer Kolben 114 der Servoeinrichtung der Bremse A verschiebbar gelagert. Bei einer Druckbeaufschlagung des Druckraums 111 betätigt dieser Kolben 114 die Lamellen 100 der Bremse A gegen eine Rückstellkraft eines hier beispielhaft als Tellerfeder ausgeführtes Rückstellelementes 113 axial in Richtung des dritten Planetenradsatzes RS3. In einer anderen Ausgestaltung kann auch vorgesehen sein, daß die abtriebsseitige Außenwand des Getriebegehäuses als separater, mit dem Getriebegehäuse verbundener Gehäusedeckel ausgeführt ist, der beispielsweise auch sowohl die Servoeinrichtung der Bremse A als auch die Außenlamellen der Bremse A aufnehmen kann.

Wie aus Fig. 4a und 4b ersichtlich, sind zur axialen Abstützung der Getriebebauelemente gegeneinander axial zwischen Nabe GN und dem nabenförmigen Abschnitt 523 der Antriebswelle AN, zwischen Antriebswelle AN und Stegwelle STW1, zwischen Stegwelle STW1 und der mit der Sonnenwelle SOW1 verbundenen Nabe 233 des Ausgangselementes 230 der Kupplung B, zwischen Sonnenrad SO1 und Stegblech STB12, zwischen Stegblech STB12 und Sonnenrad SO2, zwischen Sonnenrad SO2 und Stegblech STB2, zwischen Stegblech STB2 und Steg ST3, zwischen Steg ST3 und Sonnenrad SO3, sowie zwischen Sonnenrad SO3 und dem Getriebegehäuse GG je ein Axiallager vorgesehen.

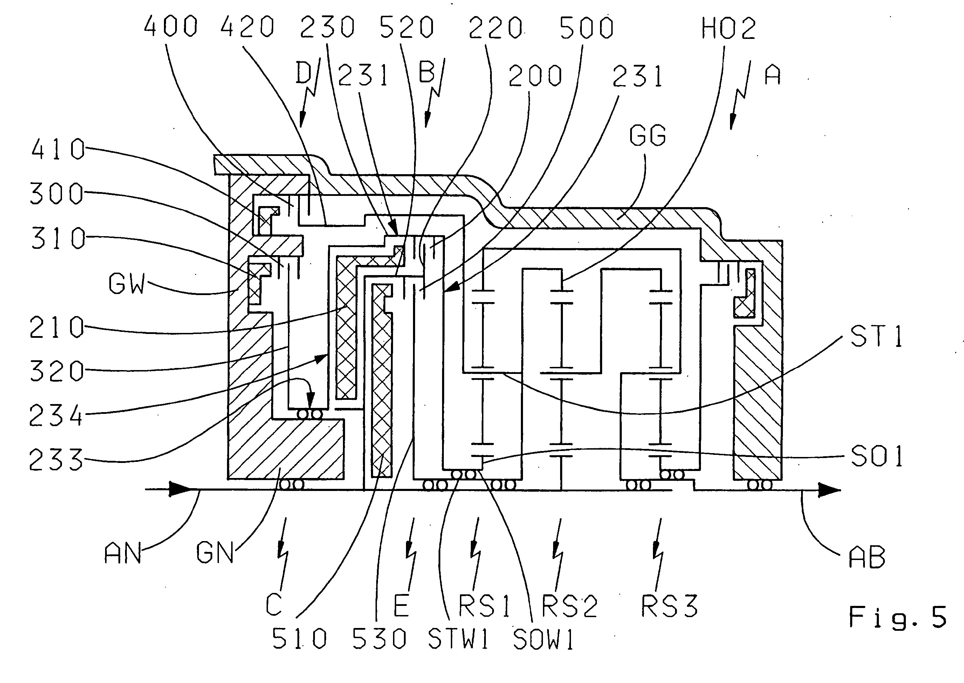

Fig. 5 zeigt nun eine zweite schematische Bauteilanordnung, beispielhaft für die erfindungsgemäße Lösung der Aufgabe. Dabei geht diese zweite erfindungsgemäße Bauteilanordnung aus von der zuvor anhand Fig. 2 erläuterten kinematischen Koppelung der drei Planetenradsätze RS1 bis RS3 und der fünf Schaltelemente A bis E, sowie von der anhand Fig. 3 erläuterten ersten erfindungsgemäßen Bauteilanordnung. Die koaxiale Anordnung von Antriebswelle AN und Abtriebswelle AB, der mittlere Getriebeteil mit den drei nebeneinander in Reihe angeordneten Planetenradsätzen RS1, RS2 und RS3, sowie die Anordnung der Bremse A auf der den beiden Planetenradsätzen RS1, RS2 abgewandten Seite des dritten Planetenradsatzes RS3 wurde in Fig. 5 unverändert von Fig. 3 übernommen. Auch sind die anderen vier Schaltelemente B bis E wie in Fig. 3 auf der den beiden Planetenradsätzen RS2, RS3 abgewandten Seite des ersten Planetenradsatzes RS1 angeordnet, also auf der dem Schaltelement A gegenüberliegenden Seite der drei nebeneinander angeordneten Planetenradsätze RS1 bis RS3. Da die in Fig. 5 vorgeschlagene Bauteilanordnung beispielhaft für einen Antriebsstrang in Standard-Antrieb konzipiert ist, sind die vier Schaltelemente B, C, D und E auf der Antriebsseite des Automatgetriebes angeordnet und das Schaltelement A auf der Abtriebsseite des Automatgetriebes, wie in Fig. 3. Auf die prinzipiell möglichen Modifikationen zur Darstellung eines Front-Quer-Antriebs wird später noch eingegangen.

Wie in Fig. 5 ersichtlich, ist im Unterschied zu Fig. 3 nunmehr keine Gehäusezwischenwand mehr vorgesehen. Nach wie vor sind die beiden Bremsen C und D räumlich gesehen übereinander angeordnet, wobei die Bremse D das räumlich äußere Schaltelement der beiden bildet, nunmehr aber unmittelbar angrenzend an die die antriebsmotorseitige Außenwand des Getriebegehäuse GG bildende Gehäusewand GW. Die Lamellen 400 der Bremse D sind zumindest teilweise in axialer Richtung gesehen radial oberhalb der Lamellen 300 der Bremse C angeordnet. In dem in Fig. 5 dargestellten Beispiel ist die Gehäusewand GW gleichzeitig als Außenlamellenträger für beide Bremsen D, C ausgebildet. Ein entsprechendes Mitnahmeprofil für Außenlamellen des Lamellenpaketes 400 der Bremse D ist auf einem möglichst großen Durchmesser am Innendurchmesser eines in den Innenraum des Getriebgehäuses GG hineinragenden ersten zylindrischen Vorsprungs der Gehäusewand GW vorgesehen. Die Servoeinrichtung 410 der Bremse D ist in der Gehäusewand GW integriert und betätigt die Lamellen 400 axial in Richtung des ersten Planetenradsatzes RS1. Ein entsprechendes..Mitnahmeprofil.. für Außenlamellen des Lamellenpaketes 300 der Bremse C ist am Innendurchmesser eines zweiten zylindrischen Vorsprungs der Gehäusewand GW vorgesehen, der sich radial unterhalb der Servoeinrichtung 410 und der Lamellen 400 der Bremse D axial.in den Innenraum des Getriebgehäuses GG erstreckt. Die Servoeinrichtung 310 der Bremse C ist ebenfalls in der Gehäusewand GW integriert, radial unterhalb des zweiten zylindrischen Vorsprungs der Gehäusewand GW, und betätigt die Lamellen 300 axial in Richtung des ersten Planetenradsatzes RS1. Entsprechend dieser Ausgestaltung ist sowohl das Eingangselement 420 der Bremse D als auch das Eingangselement 320 der Bremse C jeweils als Innenlamellenträger ausgebildet. Der Innenlamellenträger 320 der Bremse C ist dabei auf einer Nabe GN der Gehäusewand GW gelagert, die sich - ähnlich wie die beiden mit den Lamellenmitnahmeprofilen versehenen zylindrischen Vorsprünge der Gehäusewand GW - axial in Richtung des ersten Planetenradsatzes RS1 in den Innenraum des Getriebegehäuses erstreckt.

In einer anderen Ausgestaltung kann auch vorgesehen sein, daß der Außenlamellenträger der Bremse D nicht in der Gehäusewand GW integriert ist, sondern in das Getriebegehäuse GG, welches dann ein entsprechendes Mitnahmeprofil für die Außenlamellen der Bremse D aufweist. Selbstverständlich kann der Außenlamellenträger der Bremse D auch als separates Bauteil ausgeführt sein, das dann mit der Gehäusewand GW oder dem Getriebegehäuse GG über geeignete Mittel drehmomentübertragend verbunden ist. Selbstverständlich kann auch der Außenlamellenträger der Bremse C als separates Bauteil ausgeführt sein, das dann mit der Gehäusewand GW über geeignete Mittel drehmomentübertragend verbunden ist.

In noch einer anderen Ausgestaltung kann auch vorgesehen sein, daß das Eingangselement der Bremse D und/oder das Eingangselement der Bremse C nicht als Innenlamellenträger ausgeführt ist, sondern als Außenlamellenträger, wobei dann die Gehäusewand GW ein entsprechendes Mitnahmeprofil für die Innenlamellen des jeweiligen Lamellenpaketes aufweist.

Ähnlich wie in Fig. 3 sind auch in Fig. 5 die beiden Kupplungen B und E ineinander verschachtelt, wobei die Kupplung E vollständig innerhalb eines Kupplungsraums der Kupplung B angeordnet ist, der durch einen Kupplungszylinder der Kupplung B gebildet wird. Im Unterschied zu Fig. 3 sind diese beiden ineinander verschachtelten Kupplungen B und E räumlich gesehen nunmehr benachbart zum ersten Planetenradsatz RS1 angeordnet, axial zwischen den beiden übereinander angeordneten Bremsen C, D und dem ersten Planetenradsatz RS1.

Hierbei ist das Eingangselement 520 der Kupplung E als Außenlamellenträger ausgebildet, in Form eines in Richtung des ersten Planetenradsatzes RS1 hin geöffneten Topfes. Der Boden dieses Topfes (520) ist mit der Antriebswelle AN verbunden und grenzt dabei abschnittsweise an die Nabe GN der Gehäusewand GW an. Am Innendurchmesser der Zylinderfläche dieses Topfes (520) nimmt ein geeignetes Mitnahmeprofil die Außenlamellen des Lamellenpaketes 500 der Kupplung E auf. Die Servoeinrichtung 510 der Kupplung E ist innerhalb dieses Topfes angeordnet, axial unmittelbar angrenzend an den Boden des Topfes, und betätigt die Lamellen 500 axial in Richtung des ersten Planetenradsatzes RS1. Entsprechend ist das Ausgangselement 530 der Kupplung E als zumindest weitgehend scheibenförmiger Innenlamellenträger ausgebildet, der in axialer Richtung gesehen radial unterhalb des Lamellenpaketes 500 angeordnet ist und sich radial nach innen erstreckt bis zu der aus Fig. 3 bekannten Stegwelle STW1, mit der er verbunden ist. Die den ersten Planetenradsatz RS1 zentrisch durchgreifende Stegwelle STW1 ist wie in Fig. 3 als Hohlwelle ausgeführt, innerhalb der die Antriebswelle AN verläuft, und stellt die kinematische Verbindung zwischen der Kupplung E und dem Steg ST1 des ersten Planetenradsatzes RS1 und dem mit dem Steg ST1 verbundenen Hohlrad HO2 des zweiten Planetenradsatzes RS2 und der Bremse D her.

Eingangselement 220 der Kupplung B und Eingangselement 520 der Kupplung E sind als gemeinsames Bauteil zusammengefaßt. Der Außenlamellenträger (520) der Kupplung E ist hierbei gleichzeitig ein Innenlamellenträger (220) der Kupplung B. Hierzu ist am Außendurchmesser des zylindrischen Abschnitts des topfförmigen Außenlamellenträgers (520) der Kupplung E zusätzlich ein geeignetes Mitnahmeprofil vorgesehen zur Aufnahme der Belaglamellen des Lamellenpaketes 200 der Kupplung B. Die Lamellen 200 der Kupplung B sind in axialer Richtung gesehen zumindest teilweise radial über den Lamellen 500 der Kupplung E angeordnet. Das Ausgangselement 230 der Kupplung B ist entsprechend als Außenlamellenträger ausgebildet, in Form eines beidseitig überwiegend geschlossenen Zylinders. Dieser Außenlamellenträger (230) bildet den zuvor genannten Kupplungsraum der Kupplung B, innerhalb dessen die Kupplung B angeordnet ist.

Geometrisch weist das Ausgangselement 230 der Kupplung B einen zumindest weitgehend zylindrischen Abschnitt 231 sowie zwei zumindest weitgehend scheibenförmige Abschnitte 232 und 234 auf. Der zylindrische Abschnitt 231 nimmt an seinem Innendurchmesser die Außenlamellen des Lamellenpaketes 200 auf und erstreckt sich oberhalb des Lamellenpaketes 200 einerseits axial in Richtung des ersten Planetenradsatzes RS1 bis über die Lamellen 200 hinaus und andererseits axial in Richtung der Gehäusewand GW bis zu dem Lamellenpaket 300 der Bremse C. Der erste scheibenförmige Abschnitt 232 schließt sich an den zylindrischen Abschnitt 231 auf dessen dem ersten Planetenradsatz RS1 zugewandten Seite an und erstreckt sich radial nach innen bis zu der aus Fig. 3 bekannten Sonnenwelle SOW1, mit der er verbunden ist. Die Sonnenwelle SOW1 ist wie in Fig. 3 als Hohlwelle ausgeführt, auf der Stegwelle STW1 gelagert, und stellt die kinematische Verbindung zwischen der Kupplung B und dem Sonnenrad SO1 des ersten Planetenradsatzes RS1 her. Wie in Fig. 5 angedeutet, ist der erste scheibenförmige Abschnitt 232 des Ausgangselementes 230 der Kupplung B an seinem Außendurchmesser vorzugsweise in den zylindrischen Abschnitt 231 des Ausgangselementes 230 der Kupplung B eingehängt und kann somit auch als flanschförmiger Abschnitt der Sonnenwelle SOW1 interpretiert werden. Der zweite scheibenförmige Abschnitt 234 des Ausgangselementes 230 schließt sich an den zylindrischen Abschnitt 231 auf dessen der Gehäusewand GW bzw. den Lamellen 300 zugewandten Seite an und erstreckt sich radial nach innen bis zu einer Nabe 233, mit der er verbunden ist. Diese Nabe 233 ist auf der gehäusefesten Nabe GN der Gehäusewand GW verdrehbar gelagert und mit dem scheibenförmigen Eingangselement 320 (Innenlamellenträger) der Bremse C verbunden. Der zweite scheibenförmige Abschnitt 234 des Ausgangselementes 230 der Kupplung B verläuft also zumindest abschnittsweise parallel angrenzend zum Eingangselement 320 (Innenlamellenträger) der Bremse C.

Die Servoeinrichtung 210 der Kupplung B ist ebenfalls innerhalb des durch das zylinderförmige Ausgangselement 230 gebildeten Kupplungsraums der Kupplung B angeordnet, axial angrenzend an dessen zweiten scheibenförmige Abschnitt 234 und abschnittsweise radial angrenzend an dessen zylindrischen Abschnitt 231, und betätigt die Lamellen 200 der Kupplung B axial in Richtung des ersten Planetenradsatzes RS1. Dabei rotiert die Servoeinrichtung 210 der Kupplung B ebenso stets mit einer Drehzahl der Antriebswelle AN wie die Servoeinrichtung 510 der Kupplung E.

In einer anderen Ausgestaltung kann auch vorgesehen sein, daß die Servoeinrichtung der Kupplung B auf der dem ersten Planetenradsatz RS1 zugewandten Seite der Lamellen der Kupplung B angeordnet ist und die Lamellen in zum ersten Planetenradsatz RS1 entgegengesetzter Richtung betätigt. In diesem Fall rotiert die Servoeinrichtung der Kupplung B dann mit einer Drehzahl der Sonnenwelle SOW1, kann also auch stillstehen. In einer weiteren Ausgestaltung kann auch vorgesehen sein, daß die Servoeinrichtung der Kupplung E auf der dem ersten Planetenradsatz RS1 zugewandten Seite der Lamellen der Kupplung E angeordnet ist und die Lamellen in zum ersten Planetenradsatz RS1 entgegengesetzter Richtung betätigt. In diesem Fall rotiert die Servoeinrichtung der Kupplung E dann stets mit einer Drehzahl der Stegwelle STW1.

Wie in Fig. 5 weiterhin ersichtlich, ist das hier beispielhaft als Innenlamellenträger ausgebildete Eingangs element 420 der Bremse D als Zylinder ausgeführt, der das Ausgangselement 230 der Kupplung B und damit die Kupplung B in axialer Richtung radial vollständig übergreift. Auf der dem ersten Planetenradsatz RS1 zugewandten Seite des ersten scheibenförmigen Abschnitts 232 des Ausgangselementes 230 der Kupplung B erstreckt sich der zylinderförmige Innenlamellenträger (420) der Bremse D radial nach innen bis zu dem Steg ST1 des ersten Planetenradsatzes RS1, mit dem er verbunden ist.

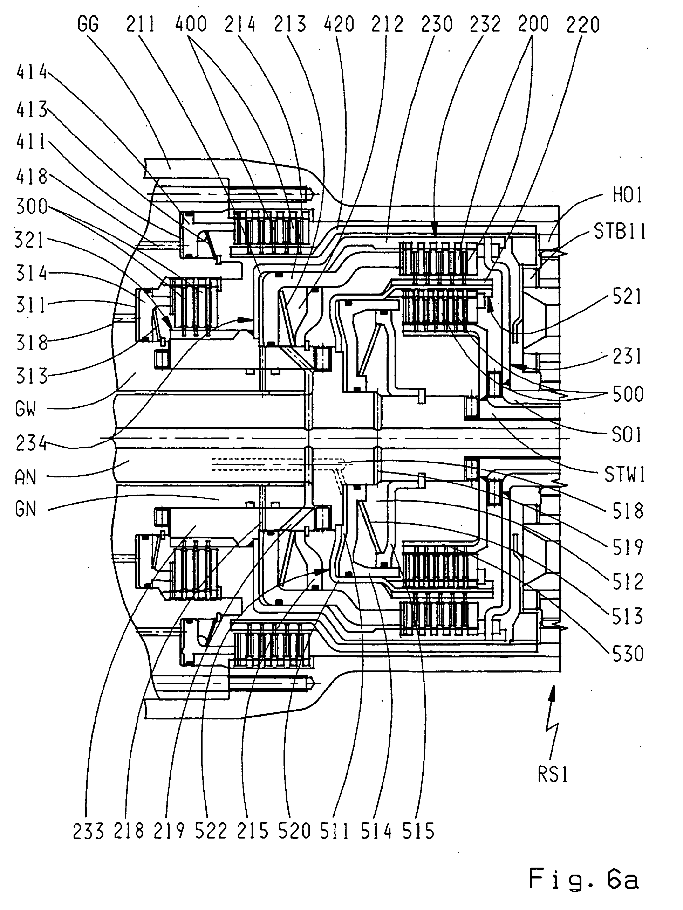

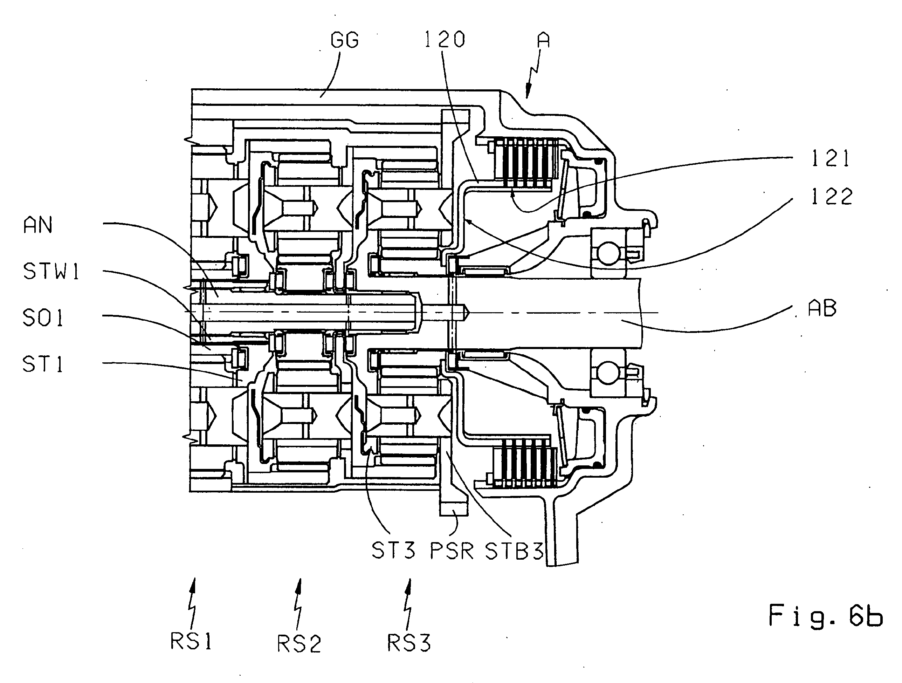

Anhand Fig. 6 wird nun eine praktisch ausgeführte Getriebekonstruktion erläutert, bei der die kinematische Koppelung und die räumliche Anordnung der drei Einzel-Planetenradsätze RS1, RS2, RS3 und der fünf Schaltelemente A bis E innerhalb des Getriebegehäuses GG und relativ zueinander im Prinzip der in Fig. 5 schematisch dargestellten Skizze entspricht. Entsprechend der in diesem Beispiel koaxialen Anordnung von Antriebs- und Abtriebswelle AN, AB ist das Automatgetriebe für ein Kraftfahrzeug mit Standard-antrieb vorgesehen. Zur besseren Darstellung ist der Getriebeschnitt in zwei Teilschnitten auf zwei Figuren Fig. 6a und Fig. 6b aufgeteilt, wobei der dem (nicht dargestellten) Antriebsmotor zugewandte Teil des Automatgetriebes in Fig. 6a und der abtriebsseitige Teil des Automatgetriebes in Fig. 6b abgebildet ist.

Wie in Fig. 6a ersichtlich, ist die Gehäusewand GW mit dem Getriebegehäuse GG verschraubt. Die Gehäusewand GW bildet eine Außenwand des Automatgetriebes und ist einem (hier zur Vereinfachung nicht dargestellten) Antriebsmotor des Automatgetriebes zugewandt. In die Gehäusewand GN kann beispielsweise auch eine - hier zur Vereinfachung nicht dargestellte - Ölpumpe integriert sein, über die das Automatgetriebe mit Schmiermittel und die Schaltelemente des Automatgetriebes mit Druckmittel versorgt werden. Die mit dem Antriebsmotor wirkverbundene Antriebswelle AN durchdringt die Gehäusewand GW im Bereich der Gehäusenabe GN zentrisch. Diese Gehäusenabe GN erstreckt sich axial in den Innenraum des Automatgetriebes hinein. Oberhalb der Nabe GN ist die Nabe 233 des Ausgangselementes 230 der Kupplung B angeordnet und auf dieser Nabe GN verdrehbar gelagert. Neben ihrer Funktion der Lagerung des Ausgangselementes 230 der Kupplung B und der Druck- und Schmiermittelzufuhr für die Servoeinrichtung der Kupplung B übernimmt die Nabe 233 gleichzeitig die Funktion eines Innenlamellenträgers für die Bremse C. Hierzu bildet ein der Gehäusewand GW zugewandter zylindrischer Abschnitt der Nabe 233 gleichzeitig den zylindrischen Abschnitt 321 des Eingangselementes (Innenlamellenträgers) der Bremse C mit einem geeigneten Mitnahmeprofil zur Aufnahme von Belaglamellen des Lamellenpaketes 300 der Bremse C. Die Lamellen 300 sind also in axialer Richtung gesehen zumindest abschnittsweise radial oberhalb der Nabe 233 des Ausgangselementes 230 der Kupplung B angeordnet. Die Funktion des Außenlamellenträgers für die Bremse C übernimmt die Gehäusewand GW. Hierzu erstreckt sich ein zylindrischer Vorsprung der Gehäusewand GW radial oberhalb der Lamellen 300 der Bremse C axial in den Innenraum des Automatgetriebes hinein und weist an seinem Innendurchmesser ein geeignetes Mitnahmeprofil auf zu Aufnahme der Außenlamellen des Lamellenpaketes 300. Die Servoeinrichtung der Bremse C ist ebenfalls in der Gehäusewand GW integriert, wobei ein Kolben 314 dieser Servoeinrichtung in einem entsprechenden Kolbenraum der Gehäusewand GW axial verschiebbar angeordnet ist. Kolben 314 und Gehäusewand GW bilden dabei einen Druckraum 311, der über eine Druckmittelzuführung 318 mit Druckmittel befüllbar ist. Bei Druckbeaufschlagung des Druckraums 311 betätigt der Kolben 314 die Lamellen 300 der Bremse C in zur Gehäusewand GW entgegengesetzter Richtung, gegen eine Rückstellkraft eines hier beispielhaft als Tellerfeder ausgebildeten Rückstellelementes 313 der Servoeinrichtung der Bremse C.

Die Bremse D ist oberhalb der Bremse C angeordnet, wobei die Lamellen 400 der Bremse D einen größeren Durchmesser aufweisen als die Lamellen 300 der Bremse C. Wie aus Fig. 6a ersichtlich, sind die Lamellen 400 und 300 der beiden Bremsen D, C im Unterschied zu Fig. 5 nicht übereinander angeordnet, sondern nunmehr axial versetzt, wobei das Lamellenpaket 400 näher an dem ersten Planetenradsatz RS1 angeordnet ist als das Lamellenpaket 300. Die Servoeinrichtung der Bremse D ist - wie schon die Servoeinrichtung der Bremse C - in die Gehäusewand GW integriert. Hierbei ist ein Kolben 414 dieser Servoeinrichtung der Bremse D in axialer Richtung radial oberhalb des zylindrischen Vorsprungs der Gehäusewand GW angeordnet, unter dem auch das Lamellenpaket 300 der Bremse C angeordnet ist. Der Kolben 414 ist in einem entsprechenden Kolbenraum der Gehäusewand GW axial verschiebbar angeordnet. Kolben 414 und Gehäusewand GW bilden dabei einen Druckraum 411, der über eine Druckmittelzuführung 418 mit Druckmittel befüllbar ist. Bei Druckbeaufschlagung des Druckraums 411 betätigt der Kolben 414 die Lamellen 400 der Bremse D in zur Gehäusewand GW entgegengesetzter Richtung, gegen eine Rückstellkraft eines hier beispielhaft als Tellerfeder ausgebildeten Rückstellelementes 413 der Servoeinrichtung der Bremse D. Auf die geometrische Ausgestaltung des als Innenlamellenträger ausgebildeten Eingangselementes 420 der Bremse D wird später eingegangen.

In Richtung des ersten Planetenradsatzes RS1 gesehen, schließt sich die Kupplung B an die beiden übereinander angeordneten Bremsen C, D axial an. Hierbei ist das Ausgangselement 230 der Kupplung B unmittelbar benachbart zu den Lamellenpaketen 300, 400 beider Bremsen C, D. Geometrisch ist das als Außenlamellenträger ausgeführte.Ausgangselement 230 der Kupplung B als beidseitig überwiegend geschlossener Zylinder ausgebildet, mit einem zumindest weitgehend zylindrischen Abschnitt 231 sowie zwei zumindest weitgehend scheibenförmigen Abschnitten 232 und 234. Der zylindrische Abschnitt 231 nimmt an seinem Innendurchmesser die Außenlamellen des Lamellenpaketes 200 der Kupplung B auf und erstreckt sich oberhalb des Lamellenpaketes 200 einerseits axial in Richtung des ersten Planetenradsatzes RS1 bis über die Lamellen 200 hinaus und andererseits axial in Richtung der Gehäusewand GW bis zu dem Lamellenpaket 300 der Bremse C. Der zweite scheibenförmige Abschnitt 234 des Ausgangselementes 230 schließt sich an den zylindrischen Abschnitt 231 auf dessen der Gehäusewand GW bzw. den Lamellen 300 zugewandten Seite an und erstreckt sich radial nach innen bis zu der zuvor schon erwähnten Nabe 233, mit der er verbunden ist. Die Außenkontour des zylindrischen Abschnitts 231 und des zweiten scheibenförmigen Abschnitts 234 des Ausgangselementes 230 der Kupplung B ist dabei an die räumliche Lage der unmittelbar angrenzenden Lamellenpakete 300 und 400 der beiden Bremsen C und D angepaßt, wodurch sich im Bereich des Lamellenpaketes 400 ein abgewinkelter Verlauf dieser Außenkontour ergibt. Wie zuvor schon erläutert, ist die Nabe 233 verdrehbar auf der gehäusefesten Nabe GN der Gehäusewand GW gelagert und mit dem Innenlamellenträger (320) der Bremse C verbunden. Wie in Fig. 6a ersichtlich, bilden der zylindrische Abschnitt 231, der zweite scheibenförmige Abschnitt 234 und die Nabe 233 des Ausgangselementes 230 ein gemeinsames Bauteil, nämlich den Außenlamellenträgers der Kupplung B. Geometrisch hat dieser Außenlamellentäger die Form eines Topfes, der in Richtung des ersten Planetenradsatz RS1 geöffnet ist. An der dem ersten Planetenradsatz RS1 zugewandten Seite dieses Außenlamellenträgers der Kupplung B ist ein scheibenförmiges Bauelement, das den ersten scheibenförmigen Abschnitt 232 des Ausgangselementes 230 der Kupplung B bildet, formschlüssig an den Topf angebunden. Diese formschlüssige Verbindung (zwischen zylindrischem und erstem scheibenförmigen Abschnitt 231, 232) ist zweckmäßigerweise ein Mitnahmeprofil gleicher Teilung wie das Verzahnungsprofil der Außenlamellen des Lamellenpaketes 200, also montagefreundlich und fertigungstechnisch günstig. Das als Blechteil ausgeführte scheibenförmige Bauelement 232 erstreckt sich - parallel angrenzend an das antriebsseitige Stegblech STB11 des ersten Planetenradsatzes RS1 - radial nach innen bis zu dem Sonnenrad SO1 des ersten Planetenradsatzes RS1, und ist im dargestellten Beispiel an seinem Innendurchmesser über eine Schweißverbindung fest mit diesem Sonnenrad SO1 verbunden. Fertigungstechnisch vorteilhaft wird hier also - im Unterschied zu Fig. 3 - auf eine zwischengeschaltete Sonnenwelle (SOW1) verzichtet.

Der aus zylindrischem Abschnitt 231, zweitem scheibenförmigen Abschnitt 234 und Nabe 233 des Ausgangselementes 230 bestehende Außenlamellenträger der Kupplung B bildet einen Kupplungsraum der Kupplung B, innerhalb dessen sowohl die Servoeinrichtung der Kupplung B als die Kupplung E vollständig angeordnet ist.

Diese Servoeinrichtung der Kupplung B umfaßt neben einem Kolben 214 zur Betätigung der Lamellen 200 der Kupplung B und einem Rückstellelement 213 auch eine Stauscheibe 215 für einen dynamischen Druckausgleich. Die Nabe 233 und die Abschnitte 234 und 231 bilden einen Kolbenraum, in dem der Kolben 214 axial verschiebbar angeordnet ist, und zusammen mit dem Kolben 214 einen Druckraum 211, der über eine Druckmittelzuführung 218 mit Druckmittel befüllbar ist. Bei Druckbeaufschlagung des Druckraums 211 betätigt der Kolben 214 die Lamellen 200 axial in Richtung des ersten Planetenradsatzes RS1, gegen eine Rückstellkraft des Rückstellelementes 213. Das Rückstellelement 213 ist hier beispielhaft als Tellerfeder ausgeführt, die sich über die Stauscheibe 215 an der Nabe 233 abstützt. Selbstverständlich kann das Rückstellelement 213 zum Beispiel auch als Ringfeder oder Ringfederpaket ausgeführt sein. Zum Ausgleich des dynamischen Kupplungsdrucks des stets mit Drehzahl des Sonnenrades SO1 des ersten Planetenradsatzes RS1 rotierenden Druckraums 211 ist ein Druckausgleichsraum 212 vorgesehen, der auf der dem ersten Planetenradsatz RS1 zugewandten Seite des Kolbens 214 angeordnet ist und durch den Kolben 214 und die zum Kolben 214 hin axial verschiebbar abgedichtete Stauscheibe 215 gebildet wird. Dieser Druckausgleichsraum 212 wird über eine Schmiermittelzuführung 219 drucklos mit Schmiermittel befüllt und erzeugt aufgrund der gleichen Rotation wie der Druckraum 211 eine Gegenkraft, die auf den Kolben 214 entgegengesetzt zum dynamischen Druck des Druckraums 211 wirkt und diesen dabei vorzugsweise annähernd ausgleicht.

Die Schmiermittelversorgung des dynamischen Druckausgleichs (Druckausgleichsraum 212) der Kupplung B erfolgt von einer Zentralbohrung innerhalb der Antriebswelle AN aus. Die Druckmittelversorgung des Druckraums 211 der Kupplung B verläuft zumindest teilweise innerhalb der gehäusefesten Nabe GN der Gehäusewand GW.

In Richtung ersten Planetenradsatzes RS1 gesehen, schließt sich das Eingangselement 520 der Kupplung E axial an die.Stauscheibe 215 der Servoeinrichtung der Kupplung B an. Geometrisch ist dieses Eingangselement 520 als Topf ausgebildet, der zum Planetenradsatz RS1 hin geöffnet ist und die Funktion eines Außenlamellenträgers für die Kupplung E übernimmt. Ein scheibenförmiger Abschnitt 522 des Eingangselementes 520 ist an seinem Innendurchmesser an einem flanschförmigen Absatz der Antriebswelle AN fest mit der Antriebswelle AN verbunden, im dargestellten Beispiel über eine Schweißverbindung. Unmittelbar axial angrenzend an die Stauscheibe 215, erstreckt sich der scheibenförmige Abschnitt 522 radial nach außen bis zu einem Durchmesser, der in etwa dem Innendurchmesser der Lamellen 200 der Kupplung B bzw. in etwa dem Außendurchmesser der Lamellen 500 der Kupplung E entspricht. An seinem Außendurchmesser schließt sich an den scheibenförmigen Abschnitt 522 ein zylindrischer Abschnitt 521 des Eingangselementes 520 der Kupplung E an und erstreckt sich in axialer Richtung fast bis zum zweiten scheibenförmigen Abschnitt 231 des Ausgangselementes 230 der Kupplung B, also bis an den Rand des Kupplungsraums, der durch den Außenlamellenträger der Kupplung B gebildet wird. An seinem Innendurchmesser weist dieser zylindrischer Abschnitt 521 ein geeignetes Mitnahmeprofil auf zur Aufnahme der Außenlamellen des Lamellenpaketes 500 der Kupplung E.

Gleichzeitig weist der zylindrischer Abschnitt 521 des Eingangselementes 520 der Kupplung E an seinem Außendurchmesser ein geeignetes Mitnahmeprofil auf zur Aufnahme der Belaglamellen des Lamellenpaketes 200 der Kupplung B. Somit übernimmt das Eingangselement 520 der Kupplung E gleichzeitig die Funktion des Eingangselementes 220 bzw. Innenlamellenträgers der Kupplung B. Wie in Fig. 6a ersichtlich, sind die Lamellenpakete 200 und 500 der Kupplungen B und E räumlich gesehen fast vollständig übereinander angeordnet, wobei der Durchmesser der Lamellen 200 - entsprechend ihrer thermischen Belastung - einen größeren Durchmesser aufweisen als die Lamellen 500.

Die Servoeinrichtung der Kupplung E ist innerhalb des Außenlamellenträgers (520) der Kupplung E angeordnet. Ähnlich wie für die Kupplung B ist auch für die stets mit Antriebswellendrehzahl rotierende Kupplung E ein dynamischer Druckausgleich vorgesehen. Außenlamellenträger 520 und ein nabenförmiger Abschnitt der Antriebswelle AN bilden einen Kolben- bzw. Druckraum 511 der Servoeinrichtung der Kupplung B, in dem ein Kolben 514 axial verschiebbar angeordnet ist. Dieser Druckraum 511 ist über eine Druckmittelzuführung 518 mit Druckmittel befüllbar. Bei Druckbeaufschlagung des Druckraums 511 betätigt der Kolben 514 die Lamellen 500 der Kupplung E axial in Richtung des ersten Planetenradsatzes RS1, gegen eine Rückstellkraft eines Rückstellelementes 513. Das hier beispielhaft wieder als Tellerfeder ausgeführte Rückstellelementes 513 stützt sich über eine Stauscheibe 515 an der Antriebswelle AN ab. Diese Stauscheibe 515 wiederum ist ein Teil des dynamischen Druckausgleichs der Kupplung E, ist zum Kolben 515 hin axial verschiebbar abgedichtet und bildet zusammen mit dem Kolben 515 einen Druckausgleichsraum 512. Dieser Druckausgleichsraum 512 wird über eine Schmiermittelzuführung 519 drucklos mit Schmiermittel befüllt und erzeugt aufgrund der gleichen Rotation wie der Druckraum 511 eine Gegenkraft, die auf den Kolben 514 entgegengesetzt zum dynamischen Druck des Druckraums 511 wirkt und diesen dabei vorzugsweise annähernd ausgleicht.

Die Schmiermittelversorgung des dynamischen Druckausgleichs (Druckausgleichsraum 512) der Kupplung E erfolgt wieder von einer Zentralbohrung innerhalb der Antriebswelle AN aus. Die Druckmittelversorgung des Druckraums 511 der Kupplung E verläuft im dargestellten Beispiel über eine Axialbohrung der Antriebswelle AN, kann aber auch zumindest teilweise innerhalb der gehäusefesten Nabe GN der Gehäusewand GW verlaufen.

Das Ausgangselement 530 der Kupplung E ist als zylinderförmiger Innenlamellenträger ausgebildet, der an seinem Außendurchmesser ein geeignetes Mitnahmeprofil aufweist zur Aufnahme der Belaglamellen des Lamellenpaketes 500. An seinem Innendurchmesser ist das Ausgangselement 530 mit der aus Fig. 5 bekannten Stegwelle STW1 fest verbunden, im dargestellten Beispiel über eine Schweißverbindung. Diese Stegwelle STW1 erstreckt sich radial oberhalb der Antriebswelle AN axial in Richtung Getriebeabtrieb und durchgreift dabei das Sonnenrad SO1 des ersten Planetenradsatzes RS1 vorllständig. Auf der der Kupplung E abgewandten Seite des ersten Planetenradsatzes ist die Stegwelle STW1 mit dem Steg St1 des ersten Planetenradsatzes verbunden, wie aus Fig. 6b ersichtlich.

Aus Fig. 6a weiterhin ersichtlich ist die geometrische Ausbildung des Eingangselementes 420 der Bremse D. Dieses als Innenlamellenträger ausgeführte Eingangselement 420 ist als Zylinder mit relativ großer axialer Erstreckung ausgebildet. An seiner der Gehäusewand GW zugewandten Seite weist dieser Innenlamellenträger (420) ein geeignetes Mitnahmeprofil zur Aufnahme der Belaglamellen des Lamellenpaketes 400 auf. Im weiteren Verlauf axial in Richtung Planetenradsatz RS1 übergreift der Innenlamellenträger (420) der Bremse D dann den zylindrischen Abschnitt 232 des Ausgangselementes 230 bzw. Außenlamellenträgers der Kupplung B vollständig und erstreckt sich bis in den Bereich des Hohlrades HO1 des ersten Planetenradsatzes RS1. In diesem Bereich ist der Innenlamellenträger (420) der Bremse D mit dem antriebsseitigen Stegblech STB11 des Stegs (ST1) des ersten Planetenradsatzes RS1 verbunden, im dargestellten Beispiel formschlüssig. Selbstverständlich kann diese Verbindung auch kraftschlüssig oder stoffschlüssig ausgeführt sein.

Der in Fig. 6b dargestellte abtriebsseitige Teil des Automatgetriebes mit den drei nebeneinander in Reihe angeordneten Planetenradsätzen RS1, RS2, RS3 sowie dem auf der Abtriebsseite des Getriebegehäuses GG angeordneten Bremse A entspricht im wesentlich des anhand Fig. 4b ausführlich beschriebenen ersten Konstruktionsbeispiels, sodaß an dieser Stelle auf eine detaillierte Beschreibung weitgehend verzichtet werden kann. Ein geringfügiger Unterschied zu Fig. 4b findet sich in der geometrischen Ausführung des als Innenlamellenträger ausgebildeten Eingangselementes 120 der Bremse A, mit einer modifizierten Kontour des scheibenförmigen Abschnitts 122 dieses Innenlamellenträgers (120). Ein weiterer Unterschied zu Fig. 4b betrifft die Ausgestaltung der Abtriebswelle AB, die nunmehr zusammen mit dem Steg ST3 des dritten Planetenradsatzes RS3 einstückig ausgebildet ist. Als zusätzliches Detail angedeutet ist in Fig. 6b ein Parksperrenrad PSR, das mit dem Stegblech STB3 des dritten Planetenradsatzes RS3 fest verbunden ist. In bekannter Weise weist ein derartiges Parksperrenrad PSR an seinem Umfang verteilt eine Verzahnung auf, in die eine entsprechend ausgebildete (hier zur Vereinfachung nicht dargestellte) Parksperrenklinke zur Verriegelung der Abtriebswelle AB eingreifen kann.

Wie bereits erwähnt, ist das in Fig. 3 beschriebene Getriebeschema hinsichtlich der Anordnung von Antriebs- und Abtriebswelle des Automatgetriebes relativ zueinander als beispielhaft anzusehen. Fig. 7 zeigt nun eine beispielhafte Variation der schematischen Bauteilanordnung gemäß Fig. 3, nunmehr mit nicht koaxialer Anordnung von An- und Abtriebswelle. Ausgehend von der in Fig. 3 vorgeschlagenen Bauteilanordnung sind Antriebswelle AN und Abtriebswelle AB nunmehr achsparallel zueinander angeordnet. Zur kinematischen Anbindung der Abtriebswelle AB an das hier ständig mit dem Steg ST3 des dritten Planetenradsatzes RS3 verbundene Hohlrad HO1 des ersten Planetenradsatzes RS1 ist eine Stirnradstufe STST vorgesehen, die räumlich gesehen auf der dem zweiten Planetenradsatz RS2 gegenüberliegenden Seite des dritten Planetenradsatzes RS3 angeordnet ist, axial zwischen dem dritten Planetenradsatz RS3 und der Kupplung A. Dabei ist ein erstes Stirnrad STR1 dieser Stirnradstufe STST fest mit dem Steg ST3 des dritten Planetenradsatzes RS3 verbunden und beispielhaft an dem Sonnenrad SO3 des dritten Planetenradsatzes RS3 gelagert. Ein zweites Stirnrad STR2 dieser Stirnradstufe STST ist als Stufenzahnrad ausgebildet, dessen erste Verzahnung mit dem ersten Stirnrad STR1 kämmt, und dessen zweite Verzahnung mit einem dritten Stirnrad STR3 der Stirnradstufe STST kämmt. Dieses dritte Stirnrad STR3 wiederum ist fest mit der Abtriebswelle AB verbunden. Selbstverständlich kann anstelle der hier beschriebenen dreirädrigen Stirnradstufe auch eine geeignete andere Stirnradstufe vorgesehen sein, oder auch ein Kettentrieb.

Wie ebenfalls aus Fig. 7 ersichtlich, durchdringt die Antriebswelle AN die Gehäusewand GW und alle drei Planetenradsätze RS1, RS2, RS3 zentrisch und ist an der deckelförmigen Außenwand des Getriebegehäuses GG gelagert, die der Gehäusewand GW gegenüberliegt. Der zur Vereinfachung nicht dargestellte Antriebsmotor des Automatgetriebes ist also auf der den Planetenradsätzen abgewandten Seite der Gehäusewand GW angeordnet. Für den Fachmann ist leicht ersichtlich, daß die Antriebswelle auch die der Gehäusewand GW gegenüberliegende, deckelförmige Außenwand des Getriebegehäuses GG durchdringen und der Antriebsmotor entsprechend auf dieser Seite des Getriebes nahe der Kupplung A angeordnet sein könnte.

Um das erfindungsgemäße Mehrstufengetriebe auch für andere Konfigurationen eines Kraftfahrzeug-Antriebsstrangs einsetzen zu können, wird der Fachmann durch ähnliche Modifikationen auch eine zueinander winklige Lage von Antriebs- und Abtriebswelle des Automatgetriebes darstellen, beispielsweise durch Hinzufügen eines Kegeltriebs anstelle der zuvor beschriebenen Stirnradstufe für einen Frontantrieb mit längs zur Fahrtrichtung eingebautem Antriebsmotor.

Wie bereits erwähnt, ist das in Fig. 3, Fig. 5 und Fig. 7 beschriebene Getriebeschema auch für die erfindungsgemäße Koppelung der Radsatzelemente untereinander und zu den Schaltelementen sowie zu An- und Abtriebswelle des Automatgetriebes als beispielhaft anzusehen. Fig. 8 zeigt nun eine beispielhafte Variation der schematische Bauteilanordnung gemäß Fig. 3, mit einer modifizierten Koppelung einzelner Radsatzelemente, wobei diese kinematische Koppelung der Radsatzelemente schon aus dem Stand der Technik der DE 199 12 480 A1 bekannt ist. Im Unterschied zu Fig. 3 sind nunmehr das Hohlrad HO1 des ersten Planetenradsatzes RS1 und der Steg ST2 des zweiten Planetenradsatzes RS2 und die Abtriebswelle AB ständig miteinander verbunden, sowie der Steg ST3 des dritten Planetenradsatzes RS3 ständig mit dem Hohlrad HO2 des zweiten Planetenradsatzes RS2 und der Steg ST1 des ersten Planetenradsatzes RS1 ständig mit dem Hohlrad HO3 des dritten Planetenradsatzes RS3. Ansonsten ist die kinematischen Koppelung der drei Einzel-Planetenradsätze RS1, RS2, RS3 an die fünf Schaltelemente A bis E und an die Antriebswelle gegenüber Fig. 3 unverändert. Auch die räumliche Anordnung der fünf Schaltelemente A bis E relativ zueinander und zu den drei Planetenradsätzen RS1, RS2, RS3 ist gegenüber Fig. 3 unverändert.

Der Fachmann wird diese in Fig. 8 beschriebene Modifikation des Getriebeschemas von Fig. 3 sinngemäß auch auf die in Fig. 5 und Fig. 7 dargestellten Getriebeschemata übertragen.

Die in Fig. 3 bis Fig. 8 dargestellten schematische Bauteilanordnungen und auch die in Fig. 4a/4b dargestellte praktisch ausgeführte Getriebekonstruktion gehen generell von Lamellenbremsen als konstruktive Lösung für die als Bremse auszuführenden Schaltelemente aus. Prinzipiell sind einzelne oder auch alle Lamellenbremsen konstruktiv durch Bandbremsen ersetzbar. Im nicht geschalteten Zustand sind Bandbremsen hinsichtlich Schleppmomentverlust bekanntlich günstiger als Lamellenbremsen. Für alle gezeigten Bauteilanordnungen bietet es sich an, die im zweiten bis sechsten Vorwärtsgang nicht geschaltete Bremse D und/oder die im fünften und sechsten Vorwärtsgang sowie im Rückwärtsgang nicht geschaltete Bremse A als Bandbremse auszuführen.

### Bezugszeichen

- A: erstes Schaltelement, Bremse
- B: zweites Schaltelement, Kupplung
- C: drittes Schaltelement, Bremse
- D: viertes Schaltelement, Bremse
- E: fünftes Schaltelement, Kupplung

- AN: Antriebswelle
- AB: Abtriebswelle
- GG: Getriebegehäuse
- GW: Gehäusewand
- GN: getriebegehäusefeste Nabe
- GZ: Gehäusezwischenwand
- ABF: Abtriebsflansch
- NAN: Antriebsdrehzahlsensor
- NAB: Abtriebsdrehzahlsensor
- PSR: Parksperrenrad
- ZYL: Zylinder
- STST: Stirnradstufe
- STR1: erstes Stirnrad der Stirnradstufe
- STR2: zweites Stirnrad der Stirnradstufe
- STR3: drittes Stirnrad der Stirnradstufe

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenrad des ersten Planetenradsatzes
- SOW1: Sonnenwelle des ersten Planetenradsatzes
- STB11: erstes Stegblech des ersten Planetenradsatzes
- STB12: zweites Stegblech des ersten Planetenradsatzes
- STW1: Stegwelle des ersten Planetenradsatzes

- RS2: zweiter Planetenradsatz
- HO2: Hohlrad des zweiten Planetenradsatzes
- SO2: Sonnenrad des zweiten Planetenradsatzes
- ST2: Steg des zweiten Planetenradsatzes
- PL2: Planetenrad des zweiten Planetenradsatzes
- STB2: Stegblech des zweiten Planetenradsatzes

- RS3: dritter Planetenradsatz
- HO3: Hohlrad des dritten Planetenradsatzes
- SO3: Sonnenrad des dritten Planetenradsatzes
- ST3: Steg des dritten Planetenradsatzes
- PL3: Planetenrad des dritten Planetenradsatzes
- STB3: Stegblech des dritten Planetenradsatzes

- 100: Lamellen des ersten Schaltelementes
- 110: Servoeinrichtung des ersten Schaltelementes
- 111: Druckraum des ersten Schaltelementes
- 113: Rückstellelement der Servoeinrichtung des ersten Schaltelementes
- 114: Kolben der Servoeinrichtung des ersten Schaltelementes
- 118: Druckmittelzuführung zum Druckraum des ersten Schaltelementes
- 120: Eingangselement des ersten Schaltelementes, Innenlamellenträger
- 121: zylindrischer Abschnitt des Eingangselementes des ersten Schaltelementes
- 122: scheibenförmiger Abschnitt des Eingangselementes des ersten Schaltelementes
- 200: Lamellen des zweiten Schaltelementes
- 210: Servoeinrichtung des zweiten Schaltelementes
- 211: Druckraum des zweiten Schaltelementes
- 212: Druckausgleichsraum des zweiten Schaltelementes
- 213: Rückstellelement der Servoeinrichtung des zweiten Schaltelementes
- 214: Kolben der Servoeinrichtung des zweiten Schaltelementes
- 218: Druckmittelzuführung zum Druckraum des zweiten Schaltelementes
- 219: Schmiermittelzuführung zum Druckausgleichsraum des zweiten Schaltelementes
- 220: Eingangselement des zweiten Schaltelementes
- 221: zylindrischer Abschnitt des Eingangselementes des zweiten Schaltelementes
- 222: scheibenförmiger Abschnitt des Eingangselementes des zweiten Schaltelementes
- 223: Nabe des Eingangselementes des zweiten Schaltelementes
- 230: Ausgangselement des zweiten Schaltelementes
- 231: zylindrischer Abschnitt des Ausgangselementes des zweiten Schaltelementes
- 232: (erster) scheibenförmiger Abschnitt des Ausgangselementes des zweiten Schaltelementes
- 233: Nabe des Ausgangselementes des zweiten Schaltelementes
- 234: zweiter scheibenförmiger Abschnitt des Ausgangselementes des zweiten Schaltelementes
- 300: Lamellen des dritten Schaltelementes
- 310: Servoeinrichtung des dritten Schaltelementes
- 311: Druckraum des dritten Schaltelementes
- 313: Rückstellelement der Servoeinrichtung des dritten Schaltelementes
- 314: Kolben der Servoeinrichtung des dritten Schaltelementes
- 318: Druckmittelzuführung zum Druckraum des dritten Schaltelementes
- 320: Eingangselement des dritten Schaltelementes
- 321: zylindrischer Abschnitt des Eingangselementes des dritten Schaltelementes
- 322: scheibenförmiger Abschnitt des Eingangselementes des dritten Schaltelementes
- 330: Ausgangselement des dritten Schaltelementes
- 331: zylindrischer Abschnitt des Ausgangselementes des dritten Schaltelementes

- 400: Lamellen des vierten Schaltelementes
- 410: Servoeinrichtung des vierten Schaltelementes
- 411: Druckraum des vierten Schaltelementes
- 413: Rückstellelement der Servoeinrichtung des vierten Schaltelementes
- 414: Kolben der Servoeinrichtung des vierten Schaltelementes
- 416: Betätigungs-Stempel des vierten Schaltelementes
- 418: Druckmittelzuführung zum Druckraum der vierten Schaltelementes
- 420: Eingangselement des vierten Schaltelementes
- 421: zylindrischer Abschnitt des Eingangselementes des vierten Schaltelementes
- 500: Lamellen des fünften Schaltelementes
- 510: Servoeinrichtung des fünften Schaltelementes
- 511: Druckraum des fünften Schaltelementes
- 512: Druckausgleichsraum des fünften Schaltelementes
- 513: Rückstellelement der Servoeinrichtung des fünften Schaltelementes
- 514: Kolben der Servoeinrichtung des fünften Schaltelementes
- 515: Stauscheibe der Servoeinrichtung des fünften Schaltelementes
- 518: Druckmittelzuführung zum Druckraum des fünften Schaltelementes
- 519: Schmiermittelzuführung zum Druckausgleichsraum des fünften Schaltelementes
- 520: Eingangselement des fünften Schaltelementes
- 521: zylindrischer Abschnitt des Eingangselementes des fünften Schaltelementes
- 522: scheibenförmiger Abschnitt des Eingangselementes des fünften Schaltelementes
- 523: Nabe des des Eingangselementes des fünften Schaltelementes
- 530: Ausgangselement des fünften Schaltelementes
- 531: zylindrischer Abschnitt des Ausgangselementes des fünften Schaltelementes
- 532: scheibenförmiger Abschnitt des Ausgangselementes des fünften Schaltelementes

## Patentansprüche

1. Mehrstufen-Automatgetriebe, mit einer Antriebswelle (AN), einer Abtriebswelle (AB), mindestens drei Einzel-Planetenradsätzen (RS1, RS2, RS3), sowie mindestens fünf Schaltelementen (A bis E), wobei
- die drei Planetenradsätze (RS1, RS2, RS3) koaxial zueinander angeordnet sind,
- der zweite Planetenradsatz (RS2) räumlich gesehen zwischen dem ersten und zweiten Planetenradsatz (RS1, RS3) angeordnet ist,
- ein Sonnenrad (SO3) des dritten Planetenradsatzes (RS3) über das erste Schaltelement (A) an einem Getriebegehäuse (GG) des Mehrstufen-Automatgetriebes festsetzbar ist,
- die Antriebswelle (AN) mit einem Sonnenrad (SO2) des zweiten Planetenradsatzes (RS2) verbunden ist,
- die Antriebswelle (AN) über das zweite Schaltelement (B) mit einem Sonnenrad (SO1) des ersten Planetenradsatzes (RS1) und über das fünfte Schaltelement (E) mit einem Steg (ST1) des ersten Planetenradsatzes (RS1) verbindbar ist,
- das Sonnenrad (SO1) des ersten Planetenradsatzes (RS1) über das dritte Schaltelement (C) und der Steg (ST1) des ersten Planetenradsatzes (RS1) über das vierte Schaltelement (D) an dem Getriebegehäuse (GG) festsetzbar ist, und
- die Abtriebswelle (AB) mit einem Hohlrad (HO1) des ersten Planetenradsatzes (RS1) und einem der Stege (ST2, ST3) des zweiten oder dritten Planetenradsatzes (RS3) verbunden ist,
**dadurch gekennzeichnet, daß** das dritte und vierte Schaltelement (C, D) räumlich gesehen radial übereinander angeordnet sind, und daß das fünfte (E) und zweite (B) Schaltelement räumlich gesehen radial übereinander angeordnet sind.

2. Mehrstufen-Automatgetriebe nach Anspruch 1, **dadurch gekennzeichnet, daß** das dritte Schaltelement (C) räumlich gesehen radial unterhalb des vierten Schaltelementes (D) angeordnet ist, wobei insbesondere Lamellen (300) des dritten Schaltelementes (C) einen kleineren Durchmesser aufweisen als Lamellen (400) des vierten Schaltelementes (D).

3. Mehrstufen-Automatgetriebe nach Anspruch 2, **dadurch gekennzeichnet, daß** eine Servoeinrichtung (310) des dritten Schaltelementes (C) räumlich gesehen zumindest überwiegend radial unterhalb einer Servoeinrichtung (410) des vierten Schaltelementes (D) angeordnet ist.

4. Mehrstufen-Automatgetriebe nach einem der Ansprüche 1 bis 3, **dadurch gekennzeichnet, daß** die Servoeinrichtungen (310, 410) des dritten und vierten Schaltelementes (C, D) gemeinsam in einer getriebegehäusefesten Gehäusewand (GW), die eine Außenwand des Getriebegehäuses (GG) bildet, integriert sind.

5. Mehrstufen-Automatgetriebe nach einem der Ansprüche 1 bis 3, **dadurch gekennzeichnet, daß** die Servoeinrichtungen (310, 410) des dritten und vierten Schaltelementes (C, D) gemeinsam in einer getriebegehäusefesten Gehäusezwischenwand (GZ), die räumlich gesehen axial zwischen dem ersten Planetenradsatz (RS1) und dem zweiten und/oder fünften Schaltelement (B, E) angeordnet ist, integriert sind.

6. Mehrstufen-Automatgetriebe nach einem der Ansprüche 1 bis 5, **dadurch gekennzeichnet, daß** die Servoeinrichtung (310) des dritten Schaltelementes (C) die Lamellen (300) des dritten Schaltelementes (C) und/oder die Servoeinrichtung (410) des vierten Schaltelementes (D) die Lamellen (400) des vierten Schaltelementes (D) axial in Richtung des ersten Planetenradsatzes (RS1) betätigen.

7. Mehrstufen-Automatgetriebe nach einem der Ansprüche 1 bis 6, **dadurch gekennzeichnet, daß** Lamellen (500) des fünften Schaltelementes (E) radial unterhalb von Lamellen (200) des zweiten Schaltelementes (B) angeordnet sind.

8. Mehrstufen-Automatgetriebe nach einem der Ansprüche 1 bis 7, **dadurch gekennzeichnet, daß** das fünfte Schaltelement (E) zumindest überwiegend innerhalb eines Kupplungsraums des zweiten Schaltelementes (B) angeordnet ist, der durch einen Kupplungszylinder des zweiten Schaltelementes (B) gebildet wird.

9. Mehrstufen-Automatgetriebe nach Anspruch 8, **dadurch gekennzeichnet, daß** der Kupplungsraum des zweiten Schaltelementes (B) durch ein mit der Antriebswelle (AN) verbundenes Eingangselement (220) des zweiten Schaltelementes (B) gebildet wird.

10. Mehrstufen-Automatgetriebe nach Anspruch 8, **dadurch gekennzeichnet, daß** der Kupplungsraum des zweiten Schaltelementes (B) durch ein mit dem Sonnenrad (SO1) des ersten Planetenradsatzes (RS1) verbundenes Ausgangselement (230) des zweiten Schaltelementes (B) gebildet wird.

11. Mehrstufen-Automatgetriebe nach Anspruch 8, 9 oder 10, **dadurch gekennzeichnet, daß** eine Servoeinrichtung (510) des fünften Schaltelementes (E) zumindest überwiegend innerhalb des Kupplungsraumes des zweiten Schaltelementes (B) angeordnet ist.

12. Mehrstufen-Automatgetriebe nach einem der Ansprüche 1 bis 11, **dadurch gekennzeichnet, daß** die Servoeinrichtung (510) des fünften Schaltelementes (E) an der Antriebswelle (AN) gelagert ist.

13. Mehrstufen-Automatgetriebe nach einem der Ansprüche 1 bis 12, **dadurch gekennzeichnet, daß** eine Servoeinrichtung (210) des zweiten Schaltelementes (B) an der Antriebswelle (AN) gelagert ist.

14. Mehrstufen-Automatgetriebe nach einem der Ansprüche 1 bis 3 oder 5 bis 12, **dadurch gekennzeichnet, daß** eine Servoeinrichtung (210) des zweiten Schaltelementes (B) an der Nabe (GN) der getriebegehäusefesten Getriebewand (GW) gelagert ist.

15. Mehrstufen-Automatgetriebe nach einem der Ansprüche 7 bis 14, **dadurch gekennzeichnet, daß** das zweite Schaltelement (B) einen dynamischen Druckausgleich aufweist, dessen Druckausgleichsraum (211) durch eine Servoeinrichtung (210) des zweiten Schaltelementes (B) und einen Kupplungszylinder des fünften Schaltelementes (E) gebildet wird.

16. Mehrstufen-Automatgetriebe nach Anspruch 15, **dadurch gekennzeichnet, daß** der Druckausgleichsraum (211) des zweiten Schaltelementes (B) durch einen Kolben der Servoeinrichtung (210) des zweiten Schaltelementes (B) und einen Außenlamellenträger (520) des fünften Schaltelementes (E) gebildet wird.

17. Mehrstufen-Automatgetriebe nach einem der Ansprüche 1 bis 16, **dadurch gekennzeichnet, daß** die Servoeinrichtung (210) des zweiten Schaltelementes (B) die Lamellen (200) des zweiten Schaltelementes (B) und/oder die Servoeinrichtung (510) des fünften Schaltelementes (E) die Lamellen (500) des fünften Schaltelementes (E) axial in Richtung des ersten Planetenradsatzes (RS1) betätigen.

18. Mehrstufen-Automatgetriebe nach einem der Ansprüche 1 bis 17, **dadurch gekennzeichnet, daß** ein Ausgangselement (230) des zweiten Schaltelementes (B) die Lamellen (500) des fünften Schaltelementes (E) in axialer Richtung radial zumindest teilweise übergreift.

19. Mehrstufen-Automatgetriebe nach einem der Ansprüche 1 bis 18, **dadurch gekennzeichnet, daß** das dritte und/oder vierte Schaltelement (C, D) auf der dem zweiten Planetenradsatz (RS2) abgewandten Seite des Planetenradsatzes (RS1) angeordnet sind.

20. Mehrstufen-Automatgetriebe nach Anspruch 19, **dadurch gekennzeichnet, daß** das dritte und das vierte Schaltelement (C, D), insbesondere die Lamellen (300, 400) des dritten und vierten Schaltelementes (C, D) unmittelbar axial an den ersten Planetenradsatz (RS1) auf dessen dem zweiten Planetenradsatz (RS2) abgewandten Seite angrenzen.

21. Mehrstufen-Automatgetriebe nach einem der Ansprüche 1 bis 20, **dadurch gekennzeichnet, daß** das zweite und fünfte Schaltelement (B, E) auf der dem zweiten Planetenradsatz (RS2) abgewandten Seite des ersten Planetenradsatzes (RS1) angeordnet sind.

22. Mehrstufen-Automatgetriebe nach Anspruch 20, **dadurch gekennzeichnet, daß** das zweite und fünfte Schaltelement (B, E) unmittelbar axial an die getriebegehäusefeste Gehäusewand (GW), die eine Außenwand des Getriebegehäuses (GG) bildet, angrenzen.

23. Mehrstufen-Automatgetriebe nach Anspruch 21 oder 22, **dadurch gekennzeichnet, daß** das dritte und/oder das vierte Schaltelement (C, D) räumlich gesehen axial zwischen dem ersten Planetenradsatz (RS1) und dem zweiten und/oder fünften Schaltelement (B, E) angeordnet ist.

24. Mehrstufen-Automatgetriebe nach Anspruch 23, **dadurch gekennzeichnet, daß** das zweite und fünfte Schaltelement (B, E) auf der dem ersten Planetenradsatz (RS1) abgewandten Seite der Gehäusezwischenwand (GZ) angeordnet ist.

25. Mehrstufen-Automatgetriebe nach Anspruch 24, **dadurch gekennzeichnet, daß** die Lamellen (200, 500) des zweiten und/oder fünften Schaltelementes (B, E) axial unmittelbar an die Gehäusezwischenwand (GZ) angrenzen.

26. Mehrstufen-Automatgetriebe nach einem der Ansprüche 1 bis 3 oder 5 bis 25, **dadurch gekennzeichnet, daß** die Gehäusezwischenwand (GZ) zentrisch von einer als Hohlwelle ausgebildeten Sonnenwelle (SOW1) durchdrungen wird, über welche ein Ausgangselement (230) des zweiten Schaltelementes (B) mit dem Sonnenrads (SO1) des ersten Planetenradsatzes (RS1) verbunden ist, wobei radial innerhalb dieser Sonnenwelle (SOW1) eine ebenfalls als Hohlwelle ausgebildete Stegwelle (STW1) verläuft, über welche ein Ausgangselement (530) des fünften Schaltelementes (E) mit dem Steg (ST1) des ersten Planetenradsatzes (RS1) verbunden ist, und wobei radial innerhalb dieser Stegwelle (STW1) die Antriebswelle (AN) verläuft.

27. Mehrstufen-Automatgetriebe nach Anspruch 21 oder 22, **dadurch gekennzeichnet, daß** das zweite und das fünfte Schaltelement (B, E) unmittelbar axial an den ersten Planetenradsatz (RS1) auf dessen dem zweiten Planetenradsatz (RS2) abgewandten Seite angrenzen.

28. Mehrstufen-Automatgetriebe nach einem der Ansprüche 1 bis 27, **dadurch gekennzeichnet, daß** das erste Schaltelement (A) räumlich gesehen auf der dem zweiten Planetenradsatz (RS2) abgewandten Seite des dritten Planetenradsatzes (RS3) angeordnet ist.

29. Mehrstufen-Automatgetriebe nach Anspruch 28, **dadurch gekennzeichnet, daß** eine Servoeinrichtung (110) des ersten Schaltelementes (A) in das Getriebegehäuse (GG) oder in eine getriebegehäusefeste Gehäusewand integriert ist.

30. Mehrstufen-Automatgetriebe nach einem der Ansprüche 1 bis 29, **dadurch gekennzeichnet, daß** ein Außenlamellenträger des ersten Schaltelementes (A) in das Getriebegehäuse (GG) integriert ist.

31. Mehrstufen-Automatgetriebe nach einem der Ansprüche 1 bis 30, **dadurch gekennzeichnet, daß** Antriebswelle (AN) und Abtriebswelle (AB) koaxial zueinander verlaufen.

32. Mehrstufen-Automatgetriebe nach Anspruch 31, **dadurch gekennzeichnet, daß** die mit dem Hohlrad (HO1) des ersten Planetenradsatzes (RS1) wirkverbundene Abtriebswelle (AB) den dritten Planetenradsatz (RS3) in axialer Richtung zentrisch durchgreift.

33. Mehrstufen-Automatgetriebe nach Anspruch 31 oder 32, **dadurch gekennzeichnet, daß** die mit dem Hohlrad (HO1) des ersten Planetenradsatzes (RS1) wirkverbundene Abtriebswelle (AB) einen Kupplungsraum des ersten Schaltelementes (A) in axialer Richtung zentrisch durchgreift.

34. Mehrstufen-Automatgetriebe nach einem der Ansprüche 1 bis 30, **dadurch gekennzeichnet, daß** Antriebswelle (AN) und Abtriebswelle (AB) nicht koaxial zueinander verlaufen, insbesondere daß Antriebswelle (AN) und Abtriebswelle (AB) achsparallel oder winklig zueinander verlaufen.

35. Mehrstufen-Automatgetriebe nach Anspruch 34, **dadurch gekennzeichnet, daß** die Abtriebswelle (AB) räumlich gesehen im Bereich radial oberhalb des ersten und/oder zweiten und/oder dritten Planetenradsatzes (RS1, RS2, RS3) mit dem Hohlrad (HO1) des ersten Planetenradsatzes (RS1) wirkverbunden ist.

36. Mehrstufen-Automatgetriebe nach einem der Ansprüche 1 bis.35, **dadurch gekennzeichnet, daß** das Hohlrad (HO1) des ersten Planetenradsatzes (RS1) und der Steg (ST3) des dritten Planetenradsatzes (RS3) und die Abtriebswelle (AB) ständig miteinander verbunden sind, und daß der Steg (ST2) des zweiten Planetenradsatzes (RS2) ständig mit einem Hohlrad (HO3) des dritten Planetenradsatzes (RS3) und der Steg (ST1) des ersten Planetenradsatzes (RS1) ständig mit einem Hohlrad (HO2) des zweiten Planetenradsatzes (RS2) verbunden ist.

37. Mehrstufen-Automatgetriebe nach einem der Ansprüche 1 bis 35, **dadurch gekennzeichnet, daß** das Hohlrad (HO1) des ersten Planetenradsatzes (RS1) und der Steg (ST2) des zweiten Planetenradsatzes (RS2) und die Abtriebswelle (AB) ständig miteinander verbunden sind, und daß der Steg (ST3) des dritten Planetenradsatzes (RS3) ständig mit einem Hohlrad (HO2) des zweiten Planetenradsatzes (RS2) und der Steg (ST1) des ersten Planetenradsatzes (RS1) ständig mit einem Hohlrad (HO3) des dritten Planetenradsatzes (RS3) verbunden ist.

38. Mehrstufen-Automatgetriebe nach einem der Ansprüche 1 bis 37, **dadurch gekennzeichnet, daß** durch selektives Schließen der Schaltelemente (A bis E) mindestens sechs Vorwärtsgänge derart schaltbar sind, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

39. Mehrstufen-Automatgetriebe nach einem der Ansprüche 1 bis 38, **dadurch gekennzeichnet, daß** in dem ersten Vorwärtsgang das erste und vierte Schaltelement (A, D), in dem zweiten Vorwärtsgang das erste und dritte Schaltelement (A, C), in dem dritten Vorwärtsgang das erste und zweite Schaltelement (A, B), in dem vierten Vorwärtsgang das erste und fünfte Schaltelement (A, E), in dem fünften Vorwärtsgang das zweite und fünfte Schaltelement (B, E), in dem sechsten Vorwärtsgang das dritte und fünfte Schaltelement (C, E), und in einem Rückwärtsgang das zweite und vierte Schaltelement (B, D) geschlossen sind.

## Claims

1. The invention relates to a multistep automatic transmission with a drive shaft (AN), an output shaft (AB), at least three separate planetary gearsets (RS1, RS2, RS3), and at least five shifting components (A-E), with
- the three planetary gearsets (RS1, RS2, RS3) being arranged coaxially in relation to each other;
- the second planetary gearset (RS2) being arranged between the first and the second planetary gearsets (RS1, RS2);
- a sun gear (SO3) of the third planetary gearset (RS3) being lockable to a transmission housing (GG) of the multistep automatic transmission via the first shifting component (A);
- the drive shaft (AN) being connected to a sun gear (SO2) of the second planetary gearset (RS2);
- the drive shaft (AN) being connectable via the second shifting component (B) to a sun gear (SO1) of the first planetary gearset (RS1) and via the fifth shifting component (E) to a spider (ST1) of the first planetary gearset (RS1);
- the sun gear (SO1) of the first planetary gearset (RS1) being lockable to the transmission housing (GG) via the third shifting component (C) and the spider (ST1) of the first planetary gearset (RS1) being lockable to the transmission housing (GG) via the fourth shifting component (D);
- the output shaft (AB) being connected to a ring gear (HO1) of the first planetary gearset (RS1) and to one of the spider (ST2, ST3) of the second or third planetary gearset (RS3);
**characterized in that** the third and fourth shifting components (C, D) are arranged radially on top of each other and that the fifth (E) and the second (B) shifting components are arranged radially on top of each other.

2. Multistep automatic transmission according to claim 1, **characterized in that** the third shifting component (C) is arranged radially below the fourth shifting component (D), with disks (300) of the third shifting component (C) possessing a smaller diameter than disks (400) of the fourth shifting component (D).

3. Multistep automatic transmission according to claim 2, **characterized in that** a servo unit (310) of the third shifting component (C) is at least for the most part arranged radially below a servo unit (410) of the fourth shifting component (D).

4. Multistep automatic transmission according to one of the claims 1 through 3, **characterized in that** the servo units (310, 410) of the third and fourth shifting components (C, D) are integrated in a housing wall (GW) which forms an outer wall of the transmission housing (GG).

5. Multistep automatic transmission according to one of the claims 1 through 3, **characterized in that** the servo units (310, 410) of the third and fourth shifting components (C, D) are integrated in a transmission housing partition wall (GZ), which is arranged axially between the first planetary gearset (RS1) and the second and/or fifth shifting components (B, E).

6. Multistep automatic transmission according to one of the claims 1 through 5, **characterized in that** the servo unit (310) of the third shifting component (C) actuates the disks (300) of the third shifting component (C) and/or that the servo unit (410) of the fourth shifting component (D) actuates the disks (400) of the fourth shifting component (D) axially towards the first planetary gearset (RS1).

7. Multistep automatic transmission according to one of the claims 1 through 6, **characterized in that** disks (500) of the fifth shifting component (E) are arranged radially below disks (200) of the second shifting component (B).

8. Multistep automatic transmission according to one of the claims 1 through 7, **characterized in that** the fifth shifting component (E) is at least for the most part arranged within a clutch space of the second shifting component (B) which is formed by a clutch cylinder of the second shifting component (B).

9. Multistep automatic transmission according to claim 8, **characterized in that** the clutch space of the second shifting component (B) is formed by a drive shaft (AN)-linked input element (220) of the second shifting component (B).

10. Multistep automatic transmission according to claim 8, **characterized in that** the clutch space of the second shifting component (B) is formed by an output element (230) of the second shifting component (B) which is linked to the sun gear (SO1) of the first planetary gearset (RS1).

11. Multistep automatic transmission according to claim 8, 9 or 10, **characterized in that** a servo unit (510) of the fifth shifting component (E) is arranged at least for the most part within the clutch space of the second shifting component (B).

12. Multistep automatic transmission according to one of the claims 1 through 11, **characterized in that** the servo unit (510) of the fifth shifting component (E) is supported on the drive shaft (AN).

13. Multistep automatic transmission according to one of the claims 1 through 12, **characterized in that** a servo unit (210) of the second shifting component (B) is supported on the drive shaft (AN).

14. Multistep automatic transmission according to one of the claims 1 through 3 or 5 through 12, **characterized in that** a servo unit (210) of the second shifting component (B) is supported on the hub (GN) of the transmission wall (GW).

15. Multistep automatic transmission according to one of the claims 7 through 14, **characterized in that** the second shifting component (B) features a dynamic pressure equalization system, whose pressure equalization chamber (211) is formed by a servo unit (210) of the second shifting component (B) and a clutch cylinder of the fifth shifting component (E).

16. Multistep automatic transmission according to claim 15, **characterized in that** the pressure equalization chamber (211) of the second shifting component (B) is formed by a piston of the servo unit (210) of the second shifting component (B) an external disk carrier (520) of the fifth shifting component (E).

17. Multistep automatic transmission according to one of the claims 1 through 16, **characterized in that** the servo unit (210) of the second shifting component (B) actuates the disks (200) of the second shifting component (B) and/or that the servo unit (510) of the fifth shifting component (E) actuates the disks (500) of the fifth shifting component (E) axially towards the first planetary gearset (RS1).

18. Multistep automatic transmission according to one of the claims 1 through 17, **characterized in that** an output element (230) of the second shifting component (B) at least partially radially overlaps the disks (500) of the fifth shifting component (E) in axial direction.

19. Multistep automatic transmission according to one of the claims 1 through 18, **characterized in that** the third and/or fourth shifting components (C, D) are arranged on the side of the planetary gearset (RS1) not facing the second planetary gearset (RS2).

20. Multistep automatic transmission according to claim 19, **characterized in that** the third and the fourth shifting components (C, D), especially the disks (300, 400) of the third and fourth shifting components (C, D) are immediately axially adjacent to the first planetary gearset (RS1) on its side not facing the second planetary gearset (RS2).

21. Multistep automatic transmission according to one of the claims 1 through 20, **characterized in that** the second and fifth shifting components (B, E) are arranged on the side of the first planetary gearset (RS1) not facing the second planetary gearset (RS2).

22. Multistep automatic transmission according to claim 20, **characterized in that** the second and fifth shifting components (B, E) are arranged immediately axially adjacent to the housing wall (GW) which forms an outer wall of the transmission housing (GG).

23. Multistep automatic transmission according to claim 21 or 22, **characterized in that** the third and/or the fourth shifting component (C, D) are/is arranged axially between the first planetary gearset (RS1) and the second and/or fifth shifting component (B, E).

24. Multistep automatic transmission according to claim 23, **characterized in that** the second and fifth shifting components (B, E) are arranged on the side of the transmission partition wall (GZ) not facing the first planetary gearset (RS1).

25. Multistep automatic transmission according to claim 24, **characterized in that** the disks (200, 500) of the second and/or fifth shifting component (B/E) are arranged immediately adjacent to the housing partition wall (GZ).

26. Multistep automatic transmission according to one of the claims 1 through 3 or 5 through 25, **characterized in that** the housing partition wall (GZ) is centrally penetrated by a hollow-shaft-type sun shaft (SOW1), through which an output element (230) of the second shifting component (B) is linked to the sun gear (SO1) of the first planetary gearset (RS1), with a likewise hollow-shaft-type spider shaft (STW1) being arranged radially within this sun shaft (SOW1), through which an output element (530) of the fifth shifting component (E) is connected to the spider (ST1) of the first planetary gearset (RS1), and with the drive shaft (AN) being arranged radially within this spider shaft (STW1).

27. Multistep automatic transmission according to claim 21 or 22, **characterized in that** the second and fifth shifting components (B, E) are immediately axially adjacent to the side of the first planetary gearset (RS1) which does not face the second planetary gearset (RS2).

28. Multistep automatic transmission according to one of the claims 1 through 27, **characterized in that** the first shifting component (A) is arranged on the side of the third planetary gearset (RS3) which does not face the second planetary gearset (RS2).

29. Multistep automatic transmission according to claim 28, **characterized in that** a servo unit (110) of the first shifting component (A) is integrated in the transmission housing (GG) or in a transmission housing wall.

30. Multistep automatic transmission according to one of the claims 1 through 29, **characterized in that** an external disk carrier of the first shifting component (A) is integrated in the transmission housing (GG).

31. Multistep automatic transmission according to one of the claims 1 through 30, **characterized in that** drive shaft (AN) and output shaft (AB) are arranged coaxially in relation to each other.

32. Multistep automatic transmission according to claim 31, **characterized in that** the output shaft (AB), which is actively linked to the ring gear (H01) of the first planetary gearset (RS1), centrally extends through the third planetary gearset (RS3) in axial direction.

33. Multistep automatic transmission according to claim 31 or 32, **characterized in that** the output shaft (AB), which is actively linked to the ring gear (H01) of the first planetary gearset (RS1), centrally extends through a clutch space of the first shifting component (A) in axial direction.

34. Multistep automatic transmission according to one of the claims 1 through 30, **characterized in that** drive shaft (AN) and output shaft (AB) are not arranged coaxially in relation to each other but that drive shaft (AN) and output shaft (AB) are arranged paraxially or at angles to each other.

35. Multistep automatic transmission according to claim 34, **characterized in that** the output shaft (AB) is actively linked to the ring gear (HO1) of the first planetary gearset (RS1) in the area radially above the first and/or second and/or third planetary gearsets (RS1, RS2, RS3).

36. Multistep automatic transmission according to one of the claims 1 through 35, **characterized in that** the ring gear (H01) of the first planetary gearset (RS1) and the spider (ST3) of the third planetary gearset (RS3) and the output shaft (AB) are permanently linked to each other; and that the spider (ST2) of the second planetary gearset (RS2) is permanently linked to a ring gear (H03) of the third planetary gearset (RS3); and that the spider (ST1) of the first planetary gearset (RS1) is permanently linked to a ring gear (H02) of the second planetary gearset (RS2).

37. Multistep automatic transmission according to one of the claims 1 through 35, **characterized in that** the ring gear (HO1) of the first planetary gearset (RS1) and the spider (ST2) of the second planetary gearset (RS2) and the output shaft (AB) are permanently linked to each other; and that the spider (ST3) of the third planetary gearset (RS3) is permanently linked to a ring gear (H02) of the second planetary gearset (RS2); and that the spider (ST1) of the first planetary gearset (RS1) is permanently linked to a ring gear (H03) of the third planetary gearset (RS3).

38. Multistep automatic transmission according to one of the claims 1 through 37, **characterized in that** through selective locking of the shifting components (A through E) at least six forward gears can be shifted in such a way that for changing from one gear to the next higher or lower gear in each case only one of the shifting components actuated is unlocked and another shifting component is locked.

39. Multistep automatic transmission according to one of the claims 1 through 38, **characterized in that** in the first forward gear the first and fourth shifting components (A, D), in the second foward gear the first and third shifting components (A, C), in the third forward gear the first and second shifting components (A, B), in the fourth forward gear the first and fifth shifting components (A, E), in the fifth forward gear the second and fifth shifting components (B, E), in the sixth forward gear the third and fifth shifting components (C, E), and in a reverse gear the second and fourth shifting components (B, D) are locked.

## Revendications

1. Transmission automatique à plusieurs étages dotée d'un arbre d'entrée (AN), d'un arbre de sortie (AB), d'au moins trois trains épicycloïdaux individuels (RS1, RS2, RS3), ainsi que d'au moins cinq éléments de commande (A bis E), sachant que
- les trois trains épicycloïdaux (RS1, RS2, RS3) sont disposés coaxialement entre eux,
- le deuxième train épicycloïdal (RS2) est disposé entre le premier et le deuxième train épicycloïdal (RS1, RS3),
- un planétaire (SO3) du troisième train épicycloïdal (RS3) peut être fixé - à l'aide du premier élément de commande (A) - à un carter de la boîte de vitesses (GG) de la transmission automatique à plusieurs étages,
- l'arbre d'entrée (AN) est lié à un planétaire (SO2) du deuxième train épicycloïdal (RS2),
- l'arbre d'entrée (AN) peut être lié - à l'aide du deuxième élément de commande (B) - à un planétaire (SO1) du premier train épicycloïdal (RS1) et à l'aide du cinquième élément de commande (E) à une nervure (ST1) du premier train épicycloïdal (RS1),
- le planétaire (SO1) du premier train épicycloïdal (RS1) peut être lié - à l'aide du troisième élément de commande (C) - et la nervure (ST1) du premier train épicycloïdal (RS1) - à l'aide du quatrième élément de commande (D) - au carter de la boîte de vitesses (GG), et
- l'arbre de sortie (AB) est lié à une couronne (HO1) du premier train épicycloïdal (RS1) et à une des nervures (ST2, ST3) du deuxième ou du troisième train épicycloïdal (RS3),
**caractérisée en ce que** le troisième et le quatrième élément de commande (C, D) sont disposés radialement l'un au-dessus de l'autre, et **en ce que** le cinquième (E) et le deuxième (B) élément de commande sont disposés radialement l'un au-dessus de l'autre.

2. Transmission automatique à plusieurs étages selon la revendication 1, **caractérisée en ce que** le troisième élément de commande (C) est disposé radialement en-dessous du quatrième élément de commande (D), sachant que en particulier les disques (300) du troisième élément de commande (C) comportent un diamètre plus petit par rapport aux disques (400) du quatrième élément de commande (D).

3. Transmission automatique à plusieurs étages selon la revendication 2, **caractérisée en ce que** un dispositif d'assistance (310) du troisième élément de commande (C) est disposé, au moins essentiellement radialement en-dessous d'un dispositif d'assistance (410) du quatrième élément de commande (D).

4. Transmission automatique à plusieurs étages selon une des revendicaitons 1 à 3, **caractérisée en ce que** les dispositifs d'assistance (310, 410) du troisième et du quatrième élément de commande (C, D) sont intégrés ensemble dans une paroi solidaire du carter de la boîte de vitesses (GW), formant une paroi extérieure du carter de la boîte de vitesses (GG).

5. Transmission automatique à plusieurs étages selon une des revendications 1 à 3, **caractérisée en ce que** les dispositifs d'assistance (310, 410) du troisième et du quatrième élément de commande (C, D) sont intégrés ensemble dans une paroi intermédiaire solidaire du carter de la boîte de vitesses (GZ), celle-ci étant disposée axialement entre le premier train épicycloïdal (RS1) et le deuxième et/ou le cinquième élément de commande (B, E).

6. Transmission automatique à plusieurs étages selon une des revendications 1 à 5, **caractérisée en ce que** le dispositif d'assistance (310) du troisième élément de commande (C) actionne les disques (300) du troisième élément de commande (C) et/ou le dispositif d'assistance (410) du quatrième élément de commande (D) actionne les disques (400) du quatrième élément de commande (D) axialement en direction du premier train épicycloïdal (RS1).

7. Transmission automatique à plusieurs étages selon une des revendications 1 à 6, **caractérisée en ce que** les disques (500) du cinquième élément de commande (E) sont disposés radialement en-dessous des disques (200) du deuxième élément de commande (B).

8. Transmission automatique à plusieurs étages selon une des revendications 1 à 7, **caractérisée en ce que** le cinquième élément de commande (E) est disposé au moins essentiellement à l'intérieur d'une chambre d'embrayage du deuxième élément de commande (B), celle-ci étant formée par un cylindre récepteur d'embrayage du deuxième élément de commande (B).

9. Transmission automatique à plusieurs étages selon la revendication 8, **caractérisée en ce que** la chambre d'embrayage du deuxième élément de commande (B) est formée par un élément d'entrée (220) du deuxième élément de commande (B) lié à l'arbre d'entrée (AN).

10. Transmission automatique à plusieurs étages selon la revendication 8, **caractérisée en ce que** la chambre d'embrayage du deuxième élément de commande (B) est formée par un élément de sortie (230) du deuxième élément de commande (B) lié au planétaire (SO1) du premier train épicycloïdal (RS1).

11. Transmission automatique à plusieurs étages selon les revendications 8, 9 ou 10, **caractérisée en ce que** un dispositif d'assistance (510) du cinquième élément de commande (E) est disposé au moins à l'intérieur de la chambre d'embrayage du deuxième élément de commande (B).

12. Transmission automatique à plusieurs étages selon une des revendications 1 à 11, **caractérisée en ce que** le dispositif d'assistance (510) du cinquième élément de commande (E) est logé sur l'arbre d'entrée (AN).

13. Transmission automatique à plusieurs étages selon une des revendications 1 à 12, **caractérisée en ce que** le dispositif d'assistance (210) du deuxième élément de commande (B) est logé sur l'arbre d'entrée (AN).

14. Transmission automatique à plusieurs étages selon une des revendications 1 à 3 ou 5 à 12, **caractérisée en ce que** le dispositif d'assistance (210) du deuxième élément de commande (B) est logé sur le moyeu (GN) de la paroi solidaire du carter de la boîte de vitesses (GW).

15. Transmission automatique à plusieurs étages selon une des revendications 7 à 14, **caractérisée en ce que** le deuxième élément de commande (B) comporte un dispositif à compensation de pression dynamique, dont la chambre de compensation de la pression (211) est formée par un dispositif d'assistance (210) du deuxième élément de commande (B) et un cylindre récepteur d'embrayage du cinquième élément de commande (E).

16. Transmission automatique à plusieurs étages selon la revendication 15, **caractérisée en ce que** la chambre de compensation de pression (211) du deuxième élément de commande (B) est formée par un piston du dispositif d'assistance (210) du deuxième élément de commande (B) et un plateau porte-disques extérieur (520) du cinquième élément de commande (E).

17. Transmission automatique à plusieurs étages selon une des revendications 1 à 16, **caractérisée en ce que** le dispositif d'assistance (210) du deuxième élément de commande (B) actionne les disques (200) du deuxième élément de commande (B) et/ou le dispositif d'assistance (510) du cinquième élément de commande (E) actionne les disques (500) du cinquième élément de commande (E) axialement en direction du premier train épicycloïdal (RS1).

18. Transmission automatique à plusieurs étages selon une des revendications 1 à 17, **caractérisée en ce que** un élément de sortie (230) du deuxième élément de commande (B) enjambe au moins partiellement en sens axial les disques (500) du cinquième élément de commande (E).

19. Transmission automatique à plusieurs étages selon une des revendications 1 à 18, **caractérisée en ce que** le troisième et/ou le quatrième élément de commande (C, D) sont disposés sur le côté du train épicycloïdal (RS1) opposé au deuxième train épicycloïdal (RS2).

20. Transmission automatique à plusieurs étages selon la revendication 19, **caractérisée en ce que** le troisième et le quatrième élément de commande (C, D), en particulier les disques (300, 400) du troisième et du quatrième élément de commande (C, D) sont directement adjacents axialement au premier train épicycloïdal (RS1), à savoir au côté de celui-ci opposé au deuxième train épicycloïdal (RS2).

21. Transmission automatique à plusieurs étages selon une des revendications 1 à 20, **caractérisée en ce que** le deuxième et/ou le cinquième élément de commande (B, E) est disposé sur le côté du premier train épicycloïdal (RS1) opposé au deuxième train épicycloïdal (RS2).

22. Transmission automatique à plusieurs étages selon la revendication 20, **caractérisée en ce que** le deuxième et le cinquième élément de commande (B, E) sont directement adjacents axialement au paroi solidaire du carter de la boîte de vitesses (GW) formant une paroi extérieure du carter de la boîte de vitesses (GG).

23. Transmission automatique à plusieurs étages selon la revendication 21 ou 22, **caractérisée en ce que** le troisième et/ou le quatrième élément de commande (C, D) est disposé axialement entre le premier train épicycloïdal (RS1) et le deuxième et/ou le cinquième élément de commande (B, E).

24. Transmission automatique à plusieurs étages selon la revendication 23, **caractérisée en ce que** le deuxième et le cinquième élément de commande (B, E) sont disposés du côté de la paroi intermédiaire du carter (GZ) opposé au premier train épicycloïdal (RS1).

25. Transmission automatique à plusieurs étages selon la revendication 24, **caractérisée en ce que** les disques (200, 500) du deuxième et/ou du cinquième élément de commande (B, E) sont axialement directement adjacents à la paroi intermédiaire du carter (GZ).

26. Transmission automatique à plusieurs étages selon une des revendications 1 à 3 ou 5 à 25, **caractérisée en ce que** la paroi intermédiaire du carter (GZ) est pénétrée centriquement par un planétaire réalisé comme couronne (SOW1), par l'intermédiaire duquel un élément de sortie (230) du deuxième élément de commande (B) est lié au planétaire (SO1) du premier train épicycloïdal (RS1), sachant que à l'intérieur de ce planétaire (SOW1) est disposé radialement un arbre à palier (STW1) réalisé également comme couronne, par l'intermédiaire duquel un élément de sortie (530) du cinquième élément de commande (E) est lié à la nervure (ST1) du premier train épicycloïdal (RS1), et sachant que à l'intérieur de cet arbre à palier (STW1) est disposé radialement l'arbre d'entrée (AN).

27. Transmission automatique à plusieurs étages selon la revendication 21 ou 22, **caractérisée en ce que** le deuxième et le cinquième élément de commande (B, E) sont axialement directement adjacents au premier train épicycloïdal (RS1), à savoir au côté de celui-ci opposé au deuxième train épicycloïdal (RS2).

28. Transmission automatique à plusieurs étages selon une des revendications 1 à 27, **caractérisée en ce que** le premier élément de commande (A) est disposé sur le côté du deuxième train épicycloïdal (RS2) opposé au troisième train épicycloïdal (RS3).

29. Transmission automatique à plusieurs étages selon la revendication 28, **caractérisée en ce que** un dispositif d'assistance (110) du premier élément de commande (A) est intégré dans le carter de la boîte de vitesses (GG) ou dans une paroi solidaire du carter de la boîte de vitesses.

30. Transmission automatique à plusieurs étages selon une des revendications 1 à 29, **caractérisée en ce que** un porte-disques extérieur du premier élément de commande (A) est intégré dans le carter de la boîte de vitesses (GG).

31. Transmission automatique à plusieurs étages selon une des revendications 1 à 30, **caractérisée en ce que** l'arbre d'entrée (AN) et l'arbre de sortie (AB) sont disposés coaxialement l'un par rapport à l'autre.

32. Transmission automatique à plusieurs étages selon la revendication 31, **caractérisée en ce que** l'arbre de sortie (AB) lié activement à la couronne (H01) du premier train épicycloïdal (RS1) enjambe centriquement en sens axial le troisième train épicycloïdal (RS3).

33. Transmission automatique à plusieurs étages selon la revendication 31 ou 32, **caractérisée en ce que** l'arbre de sortie (AB) lié activement à la couronne (H01) du premier train épicycloïdal (RS 1) enjambe centriquement en sens axial une chambre d'embrayage du premier élément de commande (A).

34. Transmission automatique à plusieurs étages selon une des revendications 1 à 30, **caractérisée en ce que** l'arbre d'entrée (AN) et l'arbre de sortie (AB) ne sont pas disposés coaxialement l'un par rapport à l'autre, et **en ce que**, en particulier, l'arbre d'entrée (AN) et l'arbre de sortie (AB) sont disposés dans un plan parallèle à l'axe ou angulairement entre eux.

35. Transmission automatique à plusieurs étages selon la revendication 34, **caractérisée en ce que** l'arbre de sortie (AB) est lié, dans la zone au-dessus du premier et/ou du deuxième et/ou du troisième train épicycloïdal (RS1, RS2, RS3), en sens radial activement à la couronne (HO1) du premier train épicycloïdal (RS1).

36. Transmission automatique à plusieurs étages selon une des revendications 1 à 35, **caractérisée en ce que** la couronne (H01) du premier train épicycloïdal (RS1) et la nervure (ST3) du troisième train épicycloïdal (RS3) et l'arbre de sortie (AB) sont liés en permanence entre eux, et **en ce que** la nervure (ST2) du deuxième train épicycloïdal (RS2) est liée en permanence à une couronne (H03) du troisième train épicycloïdal (RS3) et **en ce que** la nervure (ST1) du premier train épicycloïdal (RS1) est lié en permanence à une couronne (H02) du deuxième train épicycloïdal (RS2).

37. Transmission automatique à plusieurs étages selon une des revendications 1 à 35, **caractérisée en ce que** la couronne (H01) du premier train épicycloïdal (RS1) et la nervure (ST2) du deuxième train épicycloïdal (RS2) et l'arbre de sortie (AB) sont liés en permanence entre eux, et **en ce que** la nervure (ST3) du troisième train épicycloïdal (RS3) est liée en permanence à une couronne (H02) du deuxième train épicycloïdal (RS2) et **en ce que** la nervure (ST1) du premier train épicycloïdal (RS1) est lié en permanence à une couronne (H03) du deuxième train épicycloïdal (RS3).

38. Transmission automatique à plusieurs étages selon une des revendications 1 à 37, **caractérisée en ce que** la fermeture sélective des éléments de commande (A à E) permet d'engager au moins six marches avant de telle manière que, pour le passage d'un rapport engagé au rapport immédiatement supérieur ou au rapport immédiatement inférieur, des éléments de commande qui viennent d'être actionnés, à chaque fois, n'est ouvert qu'un seul élément de commande et fermé un autre élément de commande.

39. Transmission automatique à plusieurs étages selon une des revendications 1 à 38, **caractérisée en ce que** dans la première marche avant sont fermés le premier et le quatrième élément de commande (A, D), dans la deuxième marche avant sont fermés le premier et le troisième élément de commande (A, C), dans la troisième marche avant sont fermés le premier et le deuxième élément de commande (A, B), dans la quatrième marche avant sont fermés le premier et le cinquième élément de commande (A, E), dans la cinquième marche avant sont fermés le deuxième et le cinquième élément de commande (B, E), dans la sixième marche avant sont fermés le troisième et le cinquième élément de commande (C, E), et dans une marche arrière sont fermés le deuxième et le quatrième élément de commande (B, D).
